(19) Europäisches Patentamt / European Patent Office / Office européen des brevets

(11) **EP 4 117 878 B1**

(12) **FASCICULE DE BREVET EUROPEEN**

(45) Date de publication et mention de la délivrance du brevet:
**08.05.2024 Bulletin 2024/19**

(21) Numéro de dépôt: **21717144.6**

(22) Date de dépôt: **11.03.2021**

(51) Classification Internationale des Brevets (IPC):
**B29B 11/16** (2006.01) **B32B 5/26** (2006.01)
**D04H 13/00** (2006.01)

(52) Classification Coopérative des Brevets (CPC):
**B29B 11/16; B32B 5/02; B32B 5/022; B32B 5/12;**
**B32B 5/265; D04H 3/002; D04H 3/04;**
B29K 2307/04; B32B 2250/03; B32B 2250/05;
B32B 2250/20; B32B 2250/40; B32B 2260/023;
B32B 2260/046; B32B 2262/0261; (Cont.)

(86) Numéro de dépôt international:
**PCT/FR2021/050419**

(87) Numéro de publication internationale:
**WO 2021/181050 (16.09.2021 Gazette 2021/37)**

(54) **MATÉRIAU DE RENFORT À FILS DE CARBONE TORSADÉS POUR LA CONSTITUTION DE PIÈCES COMPOSITES, PROCÉDÉS ET UTILISATION**

VERSTÄRKUNGSMATERIAL MIT VERDRILLTEN KOHLENSTOFFFÄDEN ZUR HERSTELLUNG VON VERBUNDTEILEN SOWIE ENTSPRECHENDE VERFAHREN UND VERWENDUNG

REINFORCING MATERIAL COMPRISING TWISTED CARBON THREADS FOR THE MANUFACTURE OF COMPOSITE PARTS, AND CORRESPONDING METHODS AND USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2020 FR 2002411**

(43) Date de publication de la demande:
**18.01.2023 Bulletin 2023/03**

(73) Titulaire: **Hexcel Reinforcements**
**01120 Dagneux (FR)**

(72) Inventeurs:
• **VIARD, Andréa**
**38460 Villemoirieu (FR)**
• **BERAUD, Jean-marc**
**38140 Rives (FR)**
• **THIEL, Jean-Benoît**
**38110 La Chapelle de la Tour (FR)**
• **FORESTELLO, François**
**38510 Sermérieu (FR)**

(74) Mandataire: **Cabinet Beau de Loménie**
**51 avenue Jean Jaurès**
**BP 7073**
**69301 Lyon Cedex 07 (FR)**

(56) Documents cités:
WO-A1-2010/061114    WO-A1-2011/086266
WO-A1-2012/010805    WO-A1-2013/133437
WO-A1-2014/191667    WO-A1-2019/102136
WO-A2-2008/155504

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)
B32B 2262/106; B32B 2307/202; B32B 2307/54;
B32B 2307/718; B32B 2307/726; B32B 2605/18;
Y02T 50/40

**Description**

**Domaine Technique**

La présente invention concerne le domaine technique des matériaux de renfort, adaptés à la constitution de pièces composites. Plus précisément, l'invention a pour objet des matériaux de renfort, adaptés à la réalisation de pièces composites en association avec une résine injectée ou infusée, comprenant une nappe unidirectionnelle réalisés au moins, en partie, avec un ou des fils de renfort torsadés individuellement, selon une torsion adaptée pour assurer la diffusion de la résine injectée ou infusée, lors de la réalisation de la pièce composite.

**Technique antérieure**

La fabrication de pièces ou d'articles composites, c'est-à-dire comprenant, d'une part, un ou plusieurs renforts fibreux, notamment du type nappes fibreuses unidirectionnelles et, d'autre part, une matrice (qui est, le plus souvent, principalement de type thermodurcissable et peut inclure un ou plusieurs thermoplastiques) peut, par exemple, être réalisée par un procédé dit "direct" ou "LCM" (de l'anglais « Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple, par injection dans le moule contenant les renforts fibreux (procédé "RTM", de l'anglais « Resin Transfer Moulding »), par infusion au travers de l'épaisseur des renforts fibreux (procédé "LRI", de l'anglais « Liquid Resin Infusion » ou procédé "RFI", de l'anglais « Resin Film Infusion »), ou bien encore par enduction/imprégnation manuelle au rouleau ou au pinceau, sur chacune des couches unitaires de renforts fibreux, appliquées de manière successive sur la forme. Dans le cadre de fabrication de pièces composites notamment dans le domaine aéronautique, la cadence de production en série peut être élevée. Par exemple, pour la fabrication d'avions monocouloirs, les donneurs d'ordre aéronautiques souhaitent pouvoir réaliser plusieurs dizaines d'avions par mois. Les procédés directs tels que l'infusion ou l'injection sont des procédés de grands intérêts pouvant répondre à cette exigence.

Pour les procédés RTM, LRI ou RFI, il faut en général tout d'abord fabriquer une préforme fibreuse ou empilement de la forme de l'article fini désiré, puis imprégner cette préforme ou empilement d'une résine destinée à constituer la matrice. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Les pièces composites utilisées dans l'industrie automobile, aéronautique ou navale, sont en particulier soumises à des exigences très strictes, notamment en termes de propriétés mécaniques. Pour économiser en carburant et faciliter la maintenance des pièces, l'industrie aéronautique a remplacé de nombreux matériaux métalliques par des matériaux composites qui sont plus légers.

La résine qui est ultérieurement associée, notamment par injection ou infusion, aux renforts fibreux, lors de la réalisation de la pièce, peut-être une résine thermodurcissable, par exemple du type époxy. Pour permettre un écoulement correct au travers d'une préforme constituée d'un empilement de différentes couches de renfort fibreux, cette résine est, le plus souvent, très fluide, par exemple d'une viscosité de l'ordre de 50 à 200mPa.s., voire inférieure, à la température d'infusion/injection. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches de renforts fibreux, en particulier des nappes unidirectionnelles de fils de renfort, à des couches poreuses polymériques thermoplastiques, et notamment à un non-tissé (également nommé voile) de fibres thermoplastiques. De telles solutions sont notamment décrites dans les demandes de brevet ou les brevets EP 1125728, US 6,828,016, WO 00/58083, WO 2007/015706, WO 2006/121961, US 6,503,856, US 2008/7435693, WO 2010/046609, WO 2010/061114 et EP 2 547 816, US 2008/0289743, US 2007/8361262, US 2011/9371604, WO 2011/048340. L'ajout de cette couche poreuse thermoplastique, notamment du type non-tissé permet d'améliorer les propriétés mécaniques des pièces composites obtenues, au test de compression après impact (CAI), test utilisé de manière courante pour caractériser la résistance des structures à l'impact. L'utilisation de non-tissés permet, en particulier, d'atteindre des performances mécaniques adaptées notamment au domaine de l'aéronautique.

Pour avoir des cadences de production de pièces composites satisfaisantes, les temps de dépose des matériaux de renfort secs et d'imprégnation ou infusion de la résine dans l'empilement ou la préforme de matériaux de renfort secs obtenu(e) doivent être les plus courts possibles.

Par ailleurs, dans le domaine de l'aéronautique, les contraintes liées à l'environnement électrique de l'avion en vol et au sol, notamment en cas de foudre, nécessitent de fournir un matériau répondant aux critères élevés dans ce domaine.

Pour ce faire, il a été proposé dans l'art antérieur des solutions pour :

- augmenter la perméabilité des matériaux de renfort secs à la résine liquide qui est injectée ou infusée ;
- avoir une conductivité électrique transverse satisfaisante.

La demanderesse a proposé de procéder à des micro-perforations des matériaux précédemment décrits, ce qui permet d'améliorer la perméabilité transverse du matériau (WO 2010/046609), d'améliorer sa cohésion transverse et ainsi faciliter sa mise en oeuvre par dépose automatisée (WO 2014/076433), d'améliorer la conductivité électrique transverse des pièces composites réalisées (WO 2013/160604).

Néanmoins, sur le plan industriel, cette technique nécessite un outillage particulier pour réaliser les micro-perforations et conduit à une opération de dépose difficile pour des matériaux micro-perforés, notamment pour ceux présentant des grammages élevés.

Par ailleurs, on peut mentionner la demande WO 2008/155504 au nom de la demanderesse qui décrit un procédé de fabrication d'un matériau composite dans lequel au moins un fil torsadé est déposé sur une surface de dépose, et selon une trajectoire présentant au moins une zone courbe sur la surface de dépose et dans lequel le fil de renfort est lié à la surface de dépose par un liant polymérique. Le procédé est utilisé pour réaliser des préformes ou pièces de forme complexe où le dépôt d'un fil sur une zone courbe est nécessaire et propose d'appliquer au fil en amont de sa dépose une torsion choisie pour au moins compenser les différences de longueur que présentent les trajectoires extrêmes du fil de part et d'autre de sa largeur mesurée parallèlement à la surface de dépose.

La demande WO 2013/133437, quant à elle, décrit un matériau très spécifique réalisé à partir de fils de carbone comprenant de 50000 à 60000 filaments qui sont torsadés avec une torsion de 5 à 50 tours/m et disposés dans une même direction, de manière à ne pas se chevaucher, pour fournir une feuille de carbone de masse surfacique supérieure à 800 g/m$^2$ et inférieure ou égale à 6000 g/m$^2$, adaptée à un procédé RTM. Les matériaux proposés sont destinés à la conception de pales d'éoliennes, de véhicules ou de bateaux, mais nullement adaptés au domaine de l'aéronautique.

La présente invention a donc pour objet de proposer une solution alternative aux techniques antérieures connues et adaptées au domaine de l'aéronautique, en visant à fournir de nouveaux matériaux de renfort pour la réalisation de pièces composites en association avec une résine injectée ou infusée, ces nouveaux matériaux de renfort qui, tout en conservant une perméabilité transverse élevée, présentent une tenue à la dépose améliorée, un foisonnement après dépose réduit, et une conductivité électrique transverse améliorée.

**Exposé de l'invention**

Dans ce contexte, la présente invention concerne un matériau de renfort constitué d'une nappe unidirectionnelle de renfort formée de un ou plusieurs fils de renfort de carbone, associée sur chacune de ses faces à une couche de fibres polymériques choisies parmi les non-tissés, la part polymérique du matériau de renfort représentant de 0,5 à 10% de sa masse totale, et préférentiellement de 2 à 6% de sa masse totale, ladite nappe unidirectionnelle de renfort comportant un ou une série de fils de renfort de carbone torsadé(s) individuellement selon une torsion de 3 à 15 tours/m, de préférence de 6 à 12 tours/m.

Selon des modes de réalisation, la nappe unidirectionnelle de renfort est formée de plusieurs fils de renfort de carbone, et au moins un fil de renfort sur cinq, de préférence au moins un fil de renfort sur deux ou trois, et préférentiellement, tous les fils de renfort, sont torsadés individuellement selon une torsion de 3 à 15 tours/m, de préférence de 6 à 12 tours/m.

En particulier, la nappe unidirectionnelle de renfort présente un grammage dans la gamme allant de 126 à 280 g/m$^2$, préférentiellement dans la gamme allant de 126 à 210 g/m$^2$ ou de 210 à 280 g/m$^2$.

Dans le cadre de l'invention, les couches de fibres polymériques ont un caractère thermoplastique, et, sont notamment, constituées d'un polymère thermoplastique, d'un polymère thermoplastique partiellement réticulé, d'un mélange de tels polymères, ou d'un mélange de polymères thermoplastique et thermodurcissable.

Les couches de fibres polymériques présentent un caractère collant à chaud. Aussi, leur association à la nappe unidirectionnelle de renfort est réalisée grâce à ce caractère collant à chaud.

De manière avantageuse, les couches de fibres polymériques sont des non-tissés, identiques.

Typiquement, lesdits non-tissés ont une masse surfacique appartenant à la gamme allant de 0,2 à 20 g/m$^2$ et/ou une épaisseur de 0,5 à 50 microns, de préférence de 3 à 35 microns.

Le matériau de renfort selon l'invention présente, avantageusement, la particularité d'être ni perforé, ni cousu, ni tricoté, ni tissé.

Dans le cadre de l'invention, l'utilisation de fils de renfort de carbone ayant préalablement subi une opération de torsion, de manière à avoir au sein du matériau de renfort selon l'invention, une série de fils de renfort qui présentent une torsion de 3 à 15 t/m, permet :

- d'obtenir une liaison entre les faces supérieures et inférieures de la nappe unidirectionnelle, augmentant la cohésion transverse ;

- de créer entre les deux faces de la nappe unidirectionnelle, par les fils de renfort torsadés, une continuité de diffusion pour la résine qui sera injectée ou infusée lors de la réalisation de la pièce composite. La continuité des filaments des fils de renfort torsadés qui joignent les deux faces de la nappe unidirectionnelle contribue à la perméabilité transverse. Par ailleurs, les fils de renfort torsadés sont à même de créer des canaux s'étendant le long des filaments des fils de renfort torsadés qui joignent les deux faces de la nappe unidirectionnelle. Ainsi, la perméabilité transverse est obtenue grâce à une multitude de perméabilités s'étendant au niveau des fils de renfort torsadés, suivant les filaments qui s'étendent d'une face à l'autre de la nappe unidirectionnelle ;
- de créer par les fils de renfort de carbone qui sont des conducteurs électriques, une continuité de la conductivité électrique le long des filaments des fils de renfort torsadés qui joignent les deux faces de la nappe unidirectionnelle.

L'invention concerne des matériaux de renfort pour la réalisation de pièces composites, par procédé direct. C'est-à-dire que pour la réalisation de pièces composites, les matériaux de renfort selon l'invention doivent être associés à une résine polymérique qui va être injectée ou infusée au sein dudit matériau de renfort ou d'un empilement de tels matériaux de renfort. Aussi, de manière classique, la masse de la part polymérique du matériau de renfort selon l'invention représente au plus 10% de la masse totale du matériau de renfort selon l'invention. Typiquement, la part polymérique du matériau de renfort représente de 0,5 à 10% de la masse totale du matériau de renfort, et préférentiellement de 2 à 6% de sa masse totale. Cette part polymérique correspond à la part totale de polymère(s) présente au sein du matériau de renfort selon l'invention : elle comprend donc, voire est constituée par les non-tissés présents au sein du matériau de renfort selon l'invention. Les avantages de l'invention sont obtenus, sans avoir besoin d'augmenter la part polymérique du matériau, c'est-à-dire la quantité de matière polymérique présente, dans les couches de fibres polymériques formées d'un non-tissé, présentes de part et d'autre de la nappe unidirectionnelle.

A l'exception de l'utilisation de fils de renfort torsadés, les couches de fibres polymériques des matériaux de renfort correspondent à ceux décrits dans l'art antérieur, et notamment dans la demande WO 2010/046609, avant l'étape de micro-perforations.

Lorsque la nappe unidirectionnelle de renfort est formée d'un ensemble de fils de renfort de carbone, ces derniers sont situés côte à côte. Les fils de renfort torsadés peuvent être disposés les uns à côté des autres où un ou des fils de renfort non torsadés peuvent également être intercalés entre deux fils de renfort torsadés consécutifs. Une fois la nappe unidirectionnelle formée, elle va pouvoir être associée, en particulier par contre-collage sur chacune de ses faces avec une couche de fibres polymériques choisies parmi les non tissés.

Selon une variante de l'invention utilisant une nappe unidirectionnelle de renfort, dite mixte S/Z, les matériaux de renfort sont caractérisés par le fait que tous les fils de renfort de carbone formant la nappe unidirectionnelle de renfort sont torsadés individuellement selon une torsion de 3 à 15 tours/m, de préférence de 6 à 12 tours/m, la nappe unidirectionnelle de renfort comprenant au moins 3 fils de renfort de carbone ainsi torsadés avec au moins un fil de renfort de carbone torsadé de torsion S et au moins un fil de renfort de carbone torsadé de torsion Z, et :

- lorsque le nombre total de fils de renfort de carbone torsadés formant la nappe unidirectionnelle de renfort (nommé nombre total de fils) est pair, le nombre de fils de renfort de carbone torsadés de torsion S d'un côté du plan $\Delta$ et le nombre de fils de renfort de carbone torsadés de torsion S de l'autre côté du plan $\Delta$, sont, chacun indépendamment, un entier qui appartient à la gamme {[(nombre total de fils)/4] - 35 % ; [(nombre total de fils)/4] + 35 %}, chaque borne de la gamme étant arrondie à l'entier le plus proche si la formule la définissant ne conduit pas à un entier, les autres fils de renfort de carbone torsadés étant des fils de torsion Z ;
- lorsque le nombre total de fils de renfort de carbone torsadés formant la nappe unidirectionnelle de renfort (nommé nombre total de fils) est impair, le nombre de fils de renfort de carbone torsadés de torsion S d'un côté du plan $\Delta$ et le nombre de fils de renfort de carbone torsadés de torsion S de l'autre côté du plan $\Delta$, sont soit deux entiers, soit deux entiers et demi, et sont, chacun indépendamment, dans la gamme {[(nombre total de fils)/4] - 35 % ; [(nombre total de fils)/4] + 35 %}, chaque borne de la gamme étant arrondie à l'entier ou l'entier et demi le plus proche si la formule la définissant ne conduit pas à un entier ou à un entier et demi, les autres fils de renfort de carbone torsadés étant des fils de torsion Z ;

le plan $\Delta$ étant le plan parallèle à la direction générale d'extension de ladite nappe unidirectionnelle et qui partage ladite nappe unidirectionnelle en deux parties égales, en étant perpendiculaire à sa surface.

En d'autres termes, le nombre de fils de renfort de carbone torsadés formant la nappe unidirectionnelle de renfort (nommé « nombre total de fils » dans la définition des gammes des nappes unidirectionnelles, dites mixtes S/Z, par souci de simplicité) est égal de part et d'autre du plan $\Delta$, qui se situe au niveau de la fibre moyenne de la nappe unidirectionnelle de renfort. Ainsi, si une nappe unidirectionnelle de renfort est constituée de n (n étant un nombre entier supérieur à 3 dans le cas d'une nappe unidirectionnelle de renfort, dite mixte S/Z) fils de renfort de carbone torsadés, il y a n/2 fils de renfort de carbone torsadés de part et d'autre du plan $\Delta$.

Par ailleurs, une nappe unidirectionnelle de renfort mixte S/Z comprenant un nombre entier m de fils de renfort de carbone torsadés de torsion S, la somme du nombre m1 de fils de renfort de carbone torsadés de torsion S se trouvant d'un côté du plan Δ et du nombre m2 de fils de renfort de carbone torsadés de torsion S se trouvant de l'autre côté du plan Δ est un nombre entier. De même, une nappe unidirectionnelle de renfort comprenant un nombre entier p de fils de renfort de carbone torsadés de torsion Z, la somme du nombre p1 de fils de renfort de carbone torsadés de torsion Z se trouvant d'un côté du plan Δ et du nombre p2 de fils de renfort de carbone torsadés de torsion Z se trouvant de l'autre côté du plan Δ est un nombre entier. Ainsi, par exemple, dans le cas d'une nappe unidirectionnelle de renfort formée d'un enchaînement de fils de renfort de carbone torsadés SZSZSZS (torsion des fils déposés côte à côte) répondant à la définition I1, le nombre de fils n/2 de part et d'autre du plan Δ est 3,5, m1=m2=2 et p1=p2=1,5.

En particulier de tels matériaux selon l'invention comprenant une nappe unidirectionnelle de renfort, dite mixte S/Z, présentent l'avantage de pouvoir être produits sur de grandes longueurs et à grande vitesse. Dans de tels modes de réalisations avec une nappe unidirectionnelle de renfort, dite mixte S/Z, le matériau selon l'invention présente, de manière avantageuse, une largeur supérieure à 7 mm, de préférence, supérieure à 12 mm, et de préférence dans la gamme allant de 12 mm à 51 mm, et, de préférence, une longueur de 2 m à 5000 m, de préférence de 100 m à 2000 m.

Selon un autre de ses aspects, l'invention concerne un procédé de préparation d'un matériau de renfort comprenant les étapes successives suivantes :

a1) disposer d'une nappe unidirectionnelle de renfort formée de un ou plusieurs fils de renfort torsadé(s) individuellement selon une torsion de 3 à 15 tours/m,

a2) disposer d'au moins deux couches de fibres polymériques choisies parmi les non-tissés,

a3) procéder à l'association de chacune des couches de fibres polymériques sur chacune des faces de la nappe unidirectionnelle de renfort.

Par exemple, le procédé de préparation comprend, en amont de l'étape a1), une étape de réalisation de la nappe unidirectionnelle de renfort comprenant l'application d'une torsion de 3 à 15 tours/m à un fil ou à une série de fils de renfort, ladite torsion étant appliquée à chaque fil de manière individuelle.

Selon un mode de mise en oeuvre, la nappe unidirectionnelle de renfort est formée de plusieurs fils de renfort et le procédé de préparation comprend, en amont de l'étape a1) :

i) l'application d'une torsion de 3 à 15 tours/m à une série de fils de renfort, ladite torsion étant appliquée à chaque fil de manière individuelle,
ii) l'alignement des fils torsadés ainsi obtenus, éventuellement avec d'autres fils de renfort, et disposition côte à côte desdits fils, de manière à former une nappe unidirectionnelle de renfort.

Dans un tel procédé, les couches de fibres polymériques ont un caractère collant à chaud et l'association de l'étape a3) est, avantageusement, obtenue par application de chacune des couches de fibres polymériques sur chacune des faces de la nappe unidirectionnelle de renfort, ladite application étant accompagnée ou suivie d'un chauffage des fibres polymériques, entraînant leur ramollissement ou leur fusion, lui-même suivi d'un refroidissement.

L'invention a également pour objet une préforme constituée, au moins en partie, d'un ou plusieurs matériaux de renfort conformes à l'invention.

Un autre objet de l'invention concerne un procédé de fabrication d'une pièce composite à partir d'au moins un matériau de renfort conforme à l'invention. Selon ce procédé de fabrication, une résine thermodurcissable, thermoplastique ou un mélange de résines thermodurcissable et thermoplastique est injecté(e) ou infusé(e) au sein dudit matériau de renfort, d'un empilement de plusieurs matériaux de renfort conformes à l'invention, ou d'une préforme conforme à l'invention.

En particulier, un tel procédé comprend, préalablement à l'infusion ou à l'injection de la résine, une étape de constitution d'un pli ou d'un empilement comprenant plusieurs matériaux de renfort selon l'invention, lors de laquelle ledit matériau de renfort est acheminé et circule, en continu, au sein d'un organe de guidage, pour assurer son positionnement, lors de sa dépose conduisant au pli ou empilement souhaité. De manière classique, le matériau selon l'invention est découpé à la dimension souhaitée, en particulier à la longueur souhaitée, pour la constitution du pli ou de l'empilement à réaliser.

De manière avantageuse, ce procédé de fabrication d'une pièce composite comprend, préalablement à l'infusion ou à l'injection de la résine, un dépôt ou une mise en forme, qui de préférence utilise le caractère collant à chaud des couches de fibres polymériques présentes dans le(s) matériau(x) de renfort.

Un autre objet de l'invention concerne une utilisation d'un ou plusieurs matériau(x) de renfort selon l'invention pour la réalisation d'une préforme, ou d'une pièce composite en association avec une résine thermodurcissable, thermoplastique ou un mélange de résines thermodurcissable et thermoplastique.

Avantageusement, une résine thermodurcissable, et en particulier une résine époxy, est injectée ou infusée pour la mise en oeuvre du procédé de fabrication ou l'utilisation du matériau de renfort selon l'invention.

L'invention sera mieux comprise à partir de la description détaillée qui va suivre, par référence aux figures annexées.

**Brève description des dessins**

La figure 1A est une vue partielle en coupe schématique d'un matériau de renfort conforme à l'invention.

La figure 1B est une vue en perspective schématique, partiellement arrachée, présentant un matériau de renfort conforme à l'invention dont la nappe unidirectionnelle est formée d'une série de fils torsadés.

La figure 1C est une vue en perspective schématique, partiellement arrachée, présentant un matériau de renfort conforme à l'invention dont la nappe unidirectionnelle est formée d'une série de fils de renfort 3 torsadés, selon une configuration SZSZSZ, en lisant la Figure de droite à gauche, c'est-à-dire qu'un fil de torsion S est déposé à côté d'un fil de torsion Z, lui-même déposé à côté d'un fil de torsion S, et ainsi de suite.

La figure 2 est une vue schématique représentant la torsion sur un fil de renfort torsadé conforme à l'invention.

La figure 3 est une vue schématique explicitant le principe d'une machine retordeuse pour appliquer une torsion à des fils de renfort.

La figure 4 est une vue schématique d'un poste adapté pour mesurer la largeur des fils de renfort notamment torsadés.

La figure 5 est un graphe donnant la largeur moyenne des fils de renfort (mm) en fonction de la torsion (tr/m), pour différents fils de renfort.

La figure 6 est un graphe donnant l'écart type des largeurs moyennes (mm) des fils de renfort en fonction de la torsion, pour différents fils de renfort.

La figure 7 est un graphe donnant pour un grammage de 140 $g/m^2$, les pourcentages de valeurs supérieures à la valeur cible de largeur des fils de renfort, en fonction de la torsion de différents fils de renfort.

La figure 8 est un graphe donnant pour un grammage de 210 $g/m^2$, les pourcentages de valeurs supérieures à la valeur cible de largeur des fils de renfort, en fonction de la torsion de différents fils de renfort.

La figure 9 est un graphe donnant pour un grammage de 280 g/m2, les pourcentages de valeurs supérieures à la valeur cible de largeur des fils de renfort, en fonction de la torsion de différents fils de renfort.

La figure 10 est un graphe donnant pour un grammage de 252 $g/m^2$, les pourcentages de valeurs supérieures à la valeur cible de largeur des fils de renfort, en fonction de la torsion de différents fils de renfort.

La figure 11 est un graphe donnant pour un grammage de 350 g/m2, les pourcentages de valeurs supérieures à la valeur cible de largeur des fils de renfort, en fonction de la torsion de différents fils de renfort.

La figure 12 est un schéma illustrant la position des points de mesure sur une préforme.

La figure 13 est un schéma illustrant le principe de mesure d'épaisseur d'une préforme de fils de renfort.

La figure 14 est un graphique donnant l'évolution du foisonnement en fonction du nombre de plis déposés, pour le matériau 8 selon l'invention et le matériau comparatif 3.

La figure 15 est un graphique donnant l'évolution du foisonnement en fonction du nombre de plis déposés, pour le matériau 4 selon l'invention et le matériau comparatif 3.

La figure 16 est un graphe donnant la perméabilité transverse ($m^2$) en fonction des taux volumiques de fibres (TVF) pour des matériaux comparatifs ou selon l'invention.

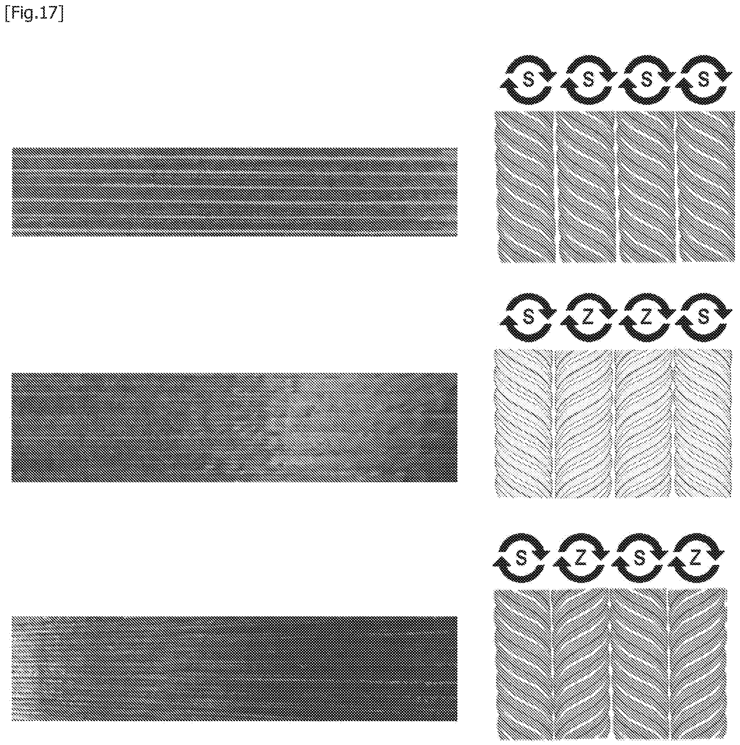

La figure 17 met en évidence les différences constatées au niveau de la constitution d'un pli réalisé avec des matériaux de renfort selon l'invention présentant 6,35 mm de large et constitués à partir d'une nappe unidirectionnelle de fils de carbone, de 280 g/m$^2$ de masse surfacique, réalisée avec 4 fils torsadés à 10 tours/m, mais selon 3 configurations : SSSS, SZZS et SZSZ. A droite, une vue schématique partielle de dessus des nappes unidirectionnelles, présentes dans chaque cas au sein des matériaux de renfort utilisés, est présentée, avec une présentation, au-dessus de chaque vue schématique partielle, du sens de torsion S ou Z des fils de renfort de chaque nappe unidirectionnelle, selon la section droite transversale desdits fils.

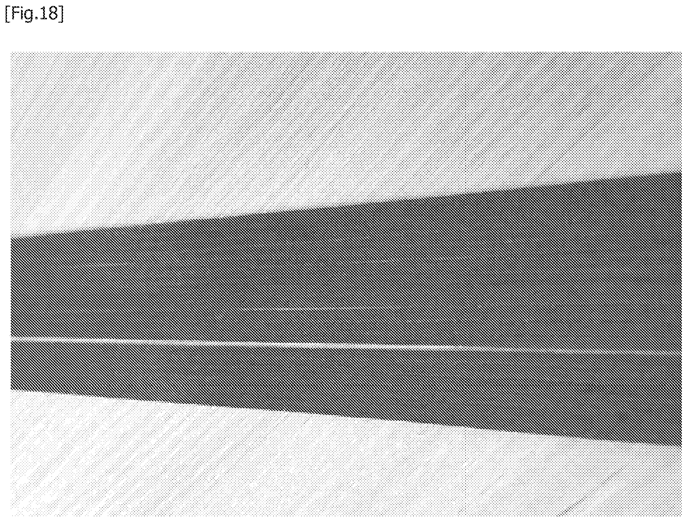

La figure 18 met en évidence le gap obtenu à la jonction entre les 7 fils de renfort ayant une torsion de type S et les 5 fils de renfort ayant une torsion de type Z, lors de la réalisation d'une nappe unidirectionnelle de fils de carbone, de 210 g/m$^2$ de masse surfacique et présentant 38,1 mm de large, réalisée avec une configuration SSSSSSSZZZZZSSSSSS (7 fils de torsion de type S, puis 5 fils de torsion de type Z, puis 6 fils de torsion de type S). En effet, lors de la réalisation de la nappe unidirectionnelle, les groupes de fils S sont entraînés vers la gauche, alors que le groupe de fils Z est entraîné vers la droite, ce qui crée un espace à la jonction 7 fils de torsion de type S/ 5 fils de torsion de type Z.

La figure 19 est une représentation schématique d'une ligne de production utilisée dans les exemples.

## Description des modes de réalisation

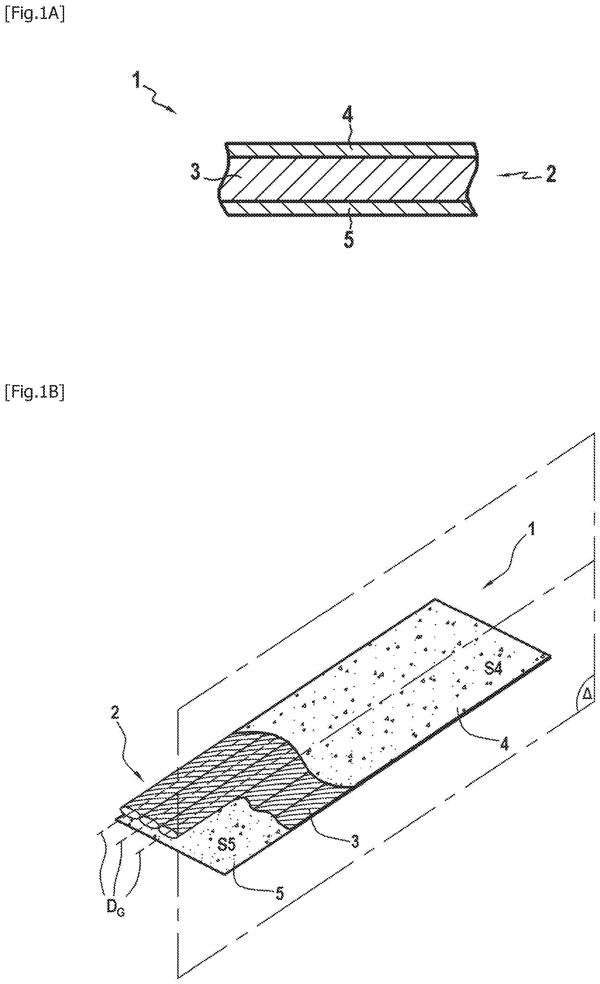

Un objet de l'invention concerne comme illustré à la figure 1A, un matériau de renfort 1 constitué d'une nappe unidirectionnelle de renfort 2 formée d'un ou plusieurs fils de renfort 3 de carbone, associée sur chacune de ses faces, à un voile correspondant à une couche de fibres polymériques 4, 5 formant un non-tissé. Plus précisément, comme cela sera décrit en détails dans la suite de la description, au moins certains des fils de renfort 3 de carbone sont torsadés individuellement.

Par « nappe unidirectionnelle de renfort », on entend une nappe constituée exclusivement ou quasi-exclusivement de fils de renfort de carbone disposés parallèlement les uns aux autres.

La figure 1B fait apparaitre une nappe unidirectionnelle 2 constituée de plusieurs fils de renfort 3 de carbone torsadés individuellement, associée sur chacune de ses faces, à un voile 4, 5. Chaque fil de renfort 3 torsadé présente une direction générale $D_G$ d'extension (qui correspond à l'axe médian du fil) qui est rectiligne dans le plan d'extension de la nappe unidirectionnelle. Chaque fil de renfort 3 torsadé présente une direction générale d'extension $D_G$ qui s'étend de manière rectiligne, parallèlement aux surfaces d'extension $S_4$ et $S_5$ des voiles 4, 5, qui sur la figure 1B sont des plans. Dans une nappe unidirectionnelle, les directions générales d'extension $D_G$ des fils de renfort sont toutes parallèles entre elles ou sensiblement parallèles entre elles. Il est généralement admis par l'homme du métier qu'une déviation entre certaines directions générales d'extension $D_G$ de deux fils de renfort inférieure ou égale 3°, de préférence inférieure ou égale à 2° et préférentiellement inférieure ou égale de 1° ne modifie pas le caractère unidirectionnel de la nappe. La direction générale d'extension de la nappe unidirectionnelle correspond à la direction générale d'extension $D_G$ des fils de renfort si celles-ci sont toutes parallèles entre elles ou à la moyenne de ces directions générales d'extension, pour les rares cas où il n'y aurait pas un parallélisme strict entre toutes les directions d'extension $D_G$ des fils de renforts 3 constituant la nappe unidirectionnelle 2.

Dans une nappe unidirectionnelle, les fils de renfort sont disposés côte à côte, pour assurer une couverture optimale de la surface. En particulier, il est recherché d'éviter des écartements locaux de plus de 1mm, perpendiculairement à la direction d'extension de la nappe unidirectionnelle, sur une longueur supérieure à 10 cm (soit parallèlement à la direction d'extension de la nappe unidirectionnelle).

Il peut être prévu la présence de fils de liage du type thermoplastique, notamment, en polyamides, copolyamides, polyesters, copolyesters, copolyamides block ester/éther, polyacétales, polyoléfines, polyuréthannes thermoplastiques, phénoxy, pour faciliter la manipulation, si besoin de la nappe, avant son association avec les voiles de fibres polymériques. Ces fils de liage s'étendront le plus souvent transversalement aux fils de carbone. Le terme « nappe unidirectionnelle » inclut aussi les tissus unidirectionnels, dans lesquels des fils de trame espacés viennent croiser avec entrelacement les fils de carbone qui s'étendent parallèlement les unes aux autres et constituent les fils de chaîne du tissu unidirectionnel. Même dans ces différents cas, où de tels fils de liage, de couture ou de trame sont présents, les fils de carbone parallèles les uns aux autres représenteront au moins 95% en masse de la nappe, qui est donc qualifiée d'« unidirectionnelle ». Néanmoins, selon un mode de réalisation particulier de l'invention, la nappe unidirectionnelle ne comporte aucun fil de trame venant entrelacer les fils de carbone, de manière à éviter toute ondulation. En particulier, le matériau de renfort selon l'invention ne comporte ni perforations, ni tissage, ni couture, ni tricotage. Dans la nappe unidirectionnelle, les fils de renfort de carbone sont, de préférence, non associés à un liant polymérique et sont donc qualifiés de secs, c'est-à-dire qu'ils ne sont ni imprégnés, ni enduits, ni associés à un quelconque liant polymérique avant leur association aux couches de fibres polymériques 4, 5. Les fils de renfort de carbone sont, néanmoins, le plus souvent caractérisés par un taux massique d'ensimage standard pouvant représenter au plus 2% de leur masse.

Un fil de renfort de carbone (qui peut être nommé plus simplement dans le cadre de l'invention fil de renfort ou fil de carbone) est en général constitué d'un ensemble de fibres ou filaments et comporte en général, de 1 000 à 320 000 filaments, avantageusement de 12 000 à 24 000 filaments. Les fils de renfort utilisés dans le cadre de l'invention sont en carbone. De façon, particulièrement préférée, dans le cadre de l'invention, des fils de carbone de 1 à 24 K sont utilisés. Les fibres constitutives sont de préférence continues. Les fils utilisés présentent en général une section droite transversale sensiblement circulaire (qualifiés de fils ronds) ou, de préférence, sensiblement parallélépipédique ou elliptique (qualifiés de fils plats). Ces fils présentent une certaine largeur et épaisseur. A titre d'exemples pour des fils libres sans contact sur un quelconque élément physique, un fil plat de carbone de 3K et d'un titre de 200 tex présente généralement une largeur de 1 à 3 mm, un fil plat de carbone de 12K et d'un titre de 446 tex, une largeur de 2 à 5 mm, un fil plat de 12K d'un titre de 800tex, une largeur entre 3 et 7mm, un fil plat de carbone de 24K et d'un titre de 1600 tex, une largeur de 5 à 12 mm et un fil plat de carbone de 24K et d'un titre de 1040 tex, une largeur de 5 à 10 mm. Un fil plat de carbone de 3 000 à 24 000 filaments présentera donc le plus souvent une largeur de 1 à 12 mm. Parmi les fils de carbone, on peut distinguer des fils Haute Résistance (HR) dont le module en traction est compris entre 220 et 241GPa et dont la contrainte à rupture en traction est comprise entre 3450 et 4830MPa, les fils de Module Intermédiaire (IM) dont le module en traction est compris entre 290 et 297GPa et dont la contrainte à rupture en traction est comprise entre 3450 et 6200MPa et les Fils Haut Module (HM) dont le module en traction est compris entre 345 et 448GPa et dont la contrainte à rupture en traction est comprise entre 3450 et 5520Pa (d'après le « ASM Handbook », ISBN 0-87170-703-9, ASM International 2001). En particulier, dans le cadre de l'invention, la nappe unidirectionnelle de renfort 2 peut être formée de un ou plusieurs fils de renfort 3 de carbone ayant un titre de 3 à 24 K, de préférence de 6 à 12 K.

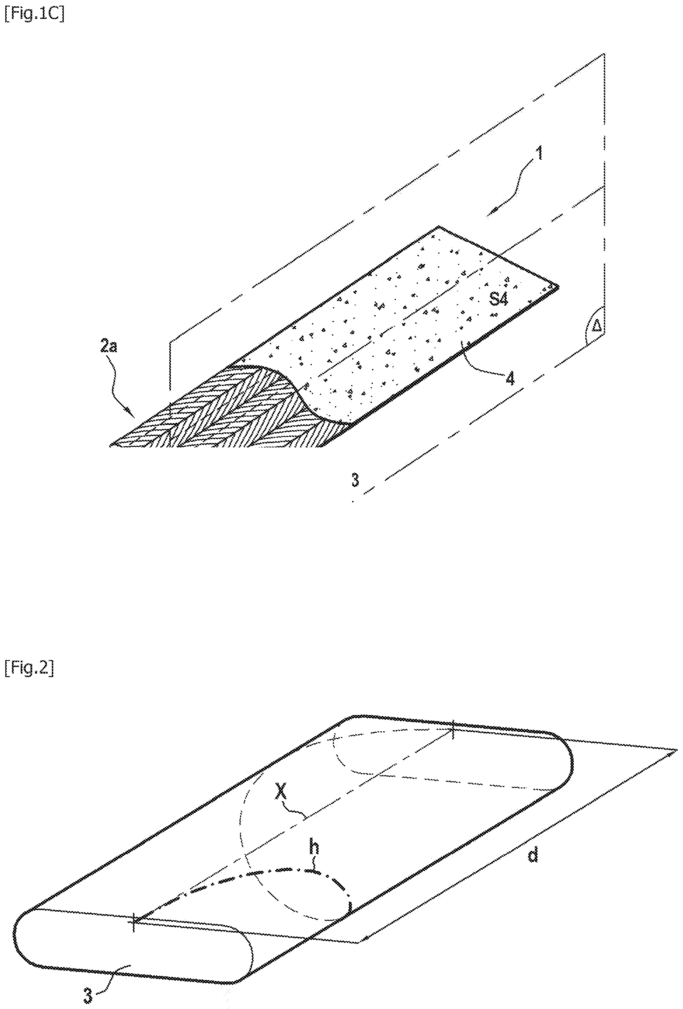

Dans le cadre de l'invention, la nappe unidirectionnelle de renfort 2 comporte un ou une série de fils de renfort 3 de carbone torsadé(s) individuellement selon une torsion de 3 à 15 tours/m, de préférence de 6 à 12 tours/m. Conformément à l'invention, on utilise un fil de renfort 3 de carbone auquel on a appliqué une torsion, c'est-à-dire une rotation relative des bords externes du fil, autour de sa fibre moyenne (correspondant à l'axe médian du fil), de manière à ce que ceux-ci décrivent une trajectoire en hélice, c'est-à-dire que la tangente en chaque point fait un angle sensiblement constant avec une direction donnée. Tel que cela ressort de la figure 2, un fil de renfort 3 de carbone torsadé comporte en son coeur, une fibre moyenne avec une direction générale correspondant à la direction longitudinale X (également nommée direction générale d'extension $D_G$) du fil de renfort 3 alors que les filaments suivent une trajectoire en hélice autour de cette direction générale. La figure 2 illustre de manière schématique la forme en hélice d'une génératrice h d'un fil de renfort 3 torsadé présentant une torsion d'un tour sur une distance linéaire d prise selon la direction longitudinale X (également nommée direction générale d'extension $D_G$).

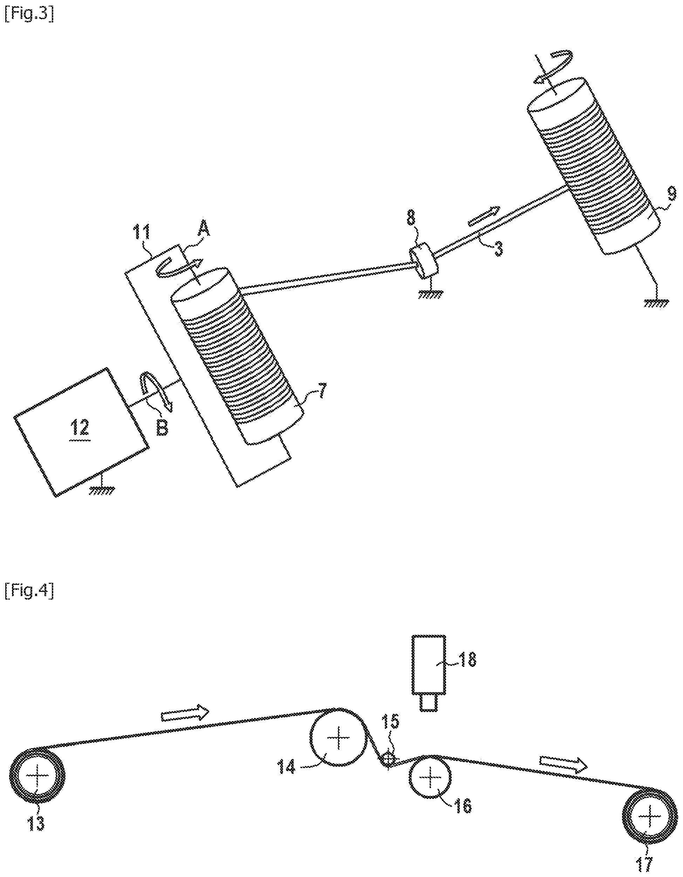

Chaque fil de renfort 3 de carbone est torsadé individuellement. Une telle torsion peut par exemple être obtenue à l'aide d'une retordeuse telle qu'une machine commercialisée par la société Kamitsu Seisakusho Ltd., modèle UT-1000. La figure 3 est un schéma illustrant le procédé de retordage mis en oeuvre par une retordeuse et permettant d'obtenir un fil de renfort 3 torsadé conforme à l'invention. Une bobine 7 sur laquelle est enroulé un fil de renfort à torsader est montée mobile en rotation autour de son axe A pour permettre le déroulement du fil de renfort, via un guide fil 8, jusqu'à une bobine d'enroulement 9 du fil de renfort 3 torsadé. La bobine 7 pourvue du fil de renfort à torsader est montée sur un support 11 entraîné en rotation par un moteur 12 selon un axe B perpendiculaire à l'axe de la bobine 7. La torsion du fil de renfort 3 dépend de la vitesse linéaire de déroulement du fil de renfort et de la vitesse de rotation du support 11 de la bobine 7.

Il doit être compris que la torsion conduit à une modification de la largeur des fils de renfort torsadés.

La suite de la description décrit l'influence du procédé de retordage sur les largeurs du fil de renfort torsadé.

La figure 4 décrit une méthode de mesure de la largeur des fils de renfort avant et après la réalisation de l'opération de la retordeuse expliquée ci-dessus. Le fil de renfort dont la largeur est à mesurer est déroulé d'une bobine 13 afin d'assurer son passage successivement sur une première barre cylindrique fixe 14, en dessous d'une deuxième barre cylindrique fixe 15 et au-dessus d'une troisième barre cylindrique fixe 16, avant d'être repris par une bobine de réception 17. Typiquement, la tension du fil de renfort sortant de la bobine 13 est comprise entre 150 et 300g. Les barres cylindriques 14-16 sont montées pour permettre la mesure de la largeur du fil de renfort dans des conditions de tension reproductibles et prédéterminées. Après sa tension lors de son passage sur la première barre cylindrique fixe 14 et la deuxième barre cylindrique fixe 15, le fil de renfort s'épanouit au niveau de la troisième barre cylindrique 16, au-dessus de laquelle est positionnée une caméra matricielle 18. Par exemple, les première, deuxième et troisième barres cylindriques 14-16 ont des diamètres respectivement de 40 mm, 20 mm et 30 mm alors que les entraxes entre la première et la deuxième barre cylindrique d'une part et entre la deuxième et la troisième barre cylindrique sont respectivement de 50mm et 20mm selon la direction horizontale et de 15mm et 10mm selon la direction verticale. Des mesures de la largeur du fil de renfort sont effectuées par la caméra 18 au cours du défilement du fil de renfort environ tous les 5mm, sur une longueur de 100ml (mètres linéaires).

Les mesures sont effectuées sur des fibres de carbone provenant de la société HEXCEL Corporation, Stamford, CT USA, présentant des densités linéaires différentes, un nombre de filaments différents et avec des torsions différentes, comme cela apparaît dans le tableau 1 ci-dessous.

Tableau 1

| Fibre | Module intermédiaire (IM) or Haute Résistance (HR) | Densité linéaire (tex) | Nombre de filaments | 0 t/m | 3 t/m | 6 t/m | 8 t/m | 10t/m | 8 t/m |
|---|---|---|---|---|---|---|---|---|---|
| IMA | IM | 446 | 12000 | x | x | x | x | x | X |
| IM7 | IM | 223 | 6000 | | x | | x | | x |
| AS7 | HR | 800 | 12000 | x | x | x | x | x | x |

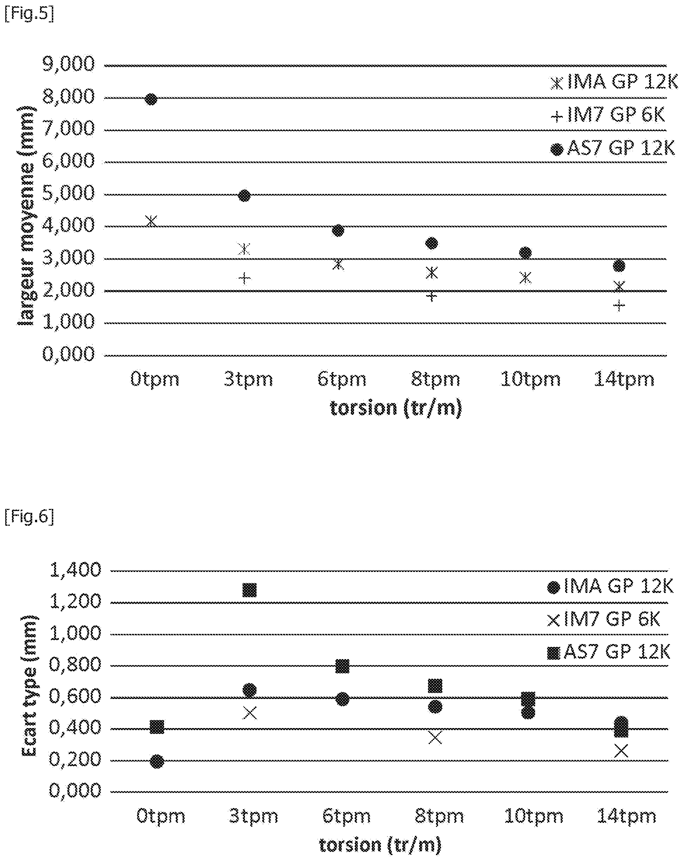

Les mesures réalisées sur des fils de renfort de carbone du tableau 1 sont reprises à la figure 5 qui donnent la largeur moyenne des fils de renfort en fonction de la torsion, pour les différents fils de renfort. La figure 5 montre clairement que la largeur moyenne des fils de renfort baisse avec l'augmentation de la torsion, ce qui est normal puisque la torsion entraine un resserrement des filaments des fils de renfort torsadés.

L'examen de la figure 6 qui donne l'écart type des largeurs moyennes en fonction de la torsion, pour les différents fils de renfort du tableau 1 montre que les écarts types en largeur baissent avec l'augmentation de la torsion. En d'autres termes, les fils de renfort torsadés ont tendance à se resserrer de façon plus homogène au fur et à mesure que la torsion augmente. Ainsi, avec la torsion qui augmente, un fil de renfort de section parallélépipédique tend vers un fil de renfort rond à faible écart type. Il est à noter que le fil de renfort non torsadé a un écart type faible en comparaison aux fils de renfort torsadés, et qu'il faut atteindre une torsion supérieure à 14 tours par mètre (tr/m, tours/m ou tpm) pour espérer obtenir une variabilité en largeur aussi faible.

Il est important de comprendre que la répartition de la largeur des fils de renfort de carbone va conditionner la possibilité de les utiliser pour la fabrication d'une nappe à grammage surfacique donné.

Par exemple, une nappe 210 grammes par mètre carré nécessitera la juxtaposition de fils d'IMA 12K tous les 2,12mm afin que la nappe soit théoriquement totalement couverte. Le calcul est le suivant :

Largeur nécessaire pour une masse surfacique donnée [mm]= Titre du fil utilisé [Tex] / masse surfacique [g/m$^2$]. L'unité de mesure du fil est le Tex, qui est la masse en gramme de 1000m de fil.

En pratique, la réalisation d'une nappe de qualité satisfaisante sera possible si les fils de renfort ont effectivement statistiquement une largeur en moyenne au moins égale à 75% de cette valeur de largeur dite « cible ». L'homme de l'art connaît habituellement cette valeur cible de largeur par essai-erreur.

Le tableau 2 ci-dessous donne les valeurs cibles de largeur par masse surfacique (grammage) et par fil de renfort de carbone utilisé :

Tableau 2

| Fil de carbone | Titre (Tex) | Masse surfacique (g/m$^2$) | Valeur cible de largeur (mm) |
|---|---|---|---|
| IMA 12K | 446 | 140 | 3,18 |
| | | 210 | 2,12 |
| | | 280 | 1,59 |
| | | 350 | 1.27 |
| IM7 6K | 223 | 140 | 1,59 |
| | | 210 | 1,06 |
| | | 280 | 0,8 |
| | | 350 | 0.64 |
| AS7 12K | 800 | 252 350 | 3,17 2.11 |

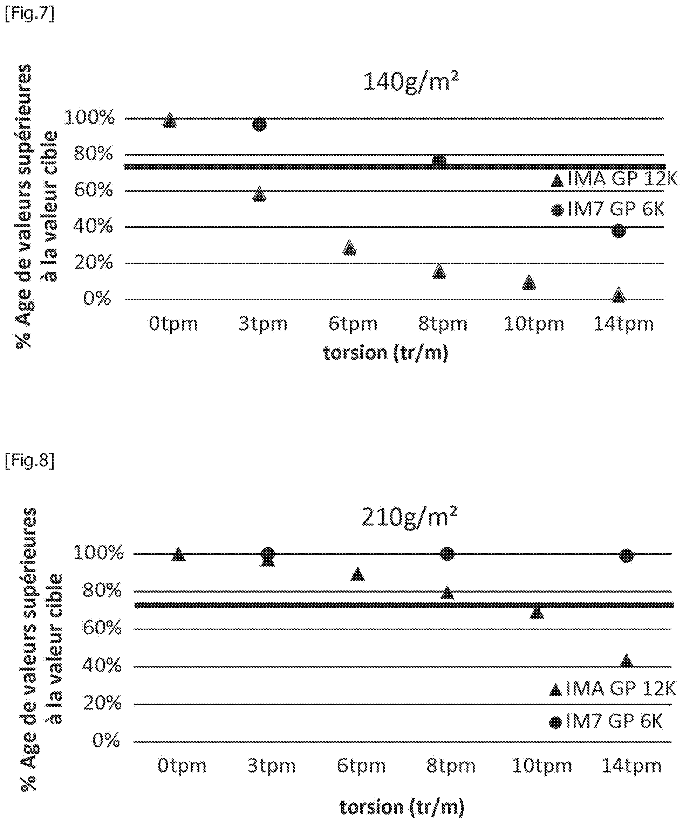

Les figures 7 à 11 sont des graphes donnant pour différents grammages, les pourcentages de valeurs supérieures à la valeur cible de largeur en fonction de la torsion de différents fils de renfort de carbone.

La figure 7 montre que pour une nappe de 140g/m$^2$ :

- En fibre IMA 12K, la nappe ne pourra être réalisée qu'en fil de renfort non torsadé;
- En fibre IM7 6K, la nappe pourra être réalisée qu'en fil de renfort avec une torsion inférieure ou égale à 8 tours par mètre.

La figure 8 montre que pour une nappe de 210g/m$^2$ :

- En fibre IMA 12K, la nappe pourra être réalisée avec des fils de renfort avec une torsion inférieure ou égale à 8 tours par mètre ;
- En fibre IM7 6K la nappe pourra être réalisée avec des fils de renfort avec une torsion allant jusqu'à 14 tours par mètre.

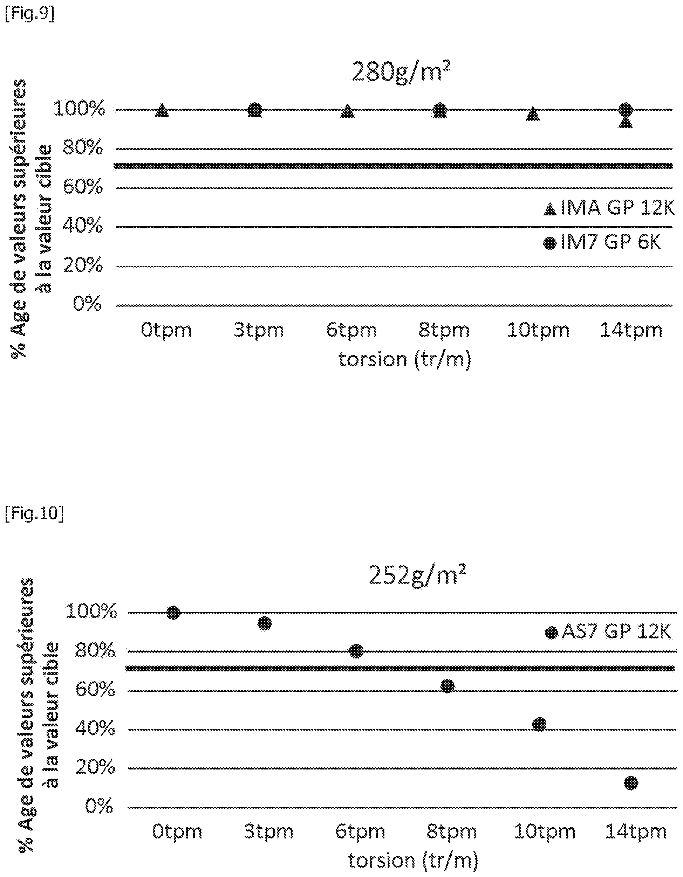

La figure 9 montre que pour une nappe de 280g/m$^2$, le grammage devient suffisamment élevé pour pouvoir utiliser des fils de renfort avec toutes les valeurs de torsion de la gamme.

La figure 10 montre que pour une nappe de 252g/m$^2$, en fibre AS7 12K, la nappe pourra être réalisée avec des fils de renfort avec une torsion inférieure ou égale à 6 tours par mètre.

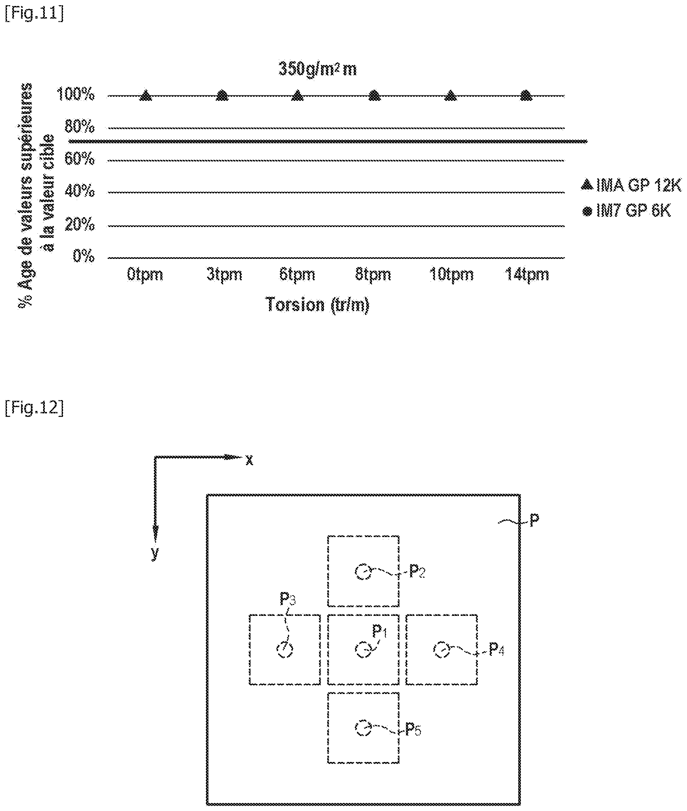

La figure 11 montre que pour une nappe de 350g/m$^2$ le grammage devient suffisamment élevé pour pouvoir utiliser des fils de renfort avec toutes les valeurs de torsion de la gamme.

Il apparait ainsi possible de définir les bornes de torsion utilisables par type de fil de renfort, pour un grammage surfacique donné, ce qui permet également de choisir à la fois les fils à utiliser et la torsion à appliquer, en fonction notamment du grammage souhaité pour la nappe unidirectionnelle.

Selon une autre caractéristique de l'objet de l'invention, la nappe unidirectionnelle de renfort 2 est formée d'au moins un fil de renfort 3 de carbone torsadé, dont la torsion est soit de type S, soit de type Z, soit d'un mixte des deux. Les fils de renfort 3 de carbone torsadés de type S et Z diffèrent par leur sens de torsion, comme représenté à droite de la figure 17. Pour les définitions de ce que l'on entend par torsion de type S ou Z, on pourra se référer à l'ouvrage « Handbook of Weaving », p 16-17 de Sabit Adanur, Professor, department of Textile Engineering, Auburn, USA, ISBN 1-58716-013-7.

Comme indiqué, la nappe unidirectionnelle de renfort 2 peut être formée par un fil de renfort 3 avec une torsion de 3 à 15 tours/m, de préférence de 6 à 12 tours/m. Dans ce cas, la nappe est qualifiée de unidirectionnelle, car l'unique fil de renfort 3 présente une fibre moyenne (correspondant à l'axe médian du fil) avec une direction générale correspondant à la direction longitudinale X du fil de renfort 3 alors que les filaments suivent une trajectoire en hélice autour de cette direction générale, comme illustré figure 2. Selon une autre variante de réalisation, la nappe unidirectionnelle de renfort 2 est formée de plusieurs fils de renfort 3 dont au moins certains présentent chacun une torsion de 3 à 15 tours/m, de préférence de 6 à 12 tours/m. Chaque fil a une direction d'extension $D_G$ qui correspond à l'axe médian du fil. Les fils de renfort 3 torsadés constitutifs de la nappe unidirectionnelle de renfort 2 sont disposés côte à côte et les directions d'extension des fils de renfort 3 torsadés sont parallèles entre elles, formant ainsi une nappe unidirectionnelle. Selon cette dernière variante de réalisation, au moins un fil de renfort 3 sur cinq, de préférence au moins un fil de renfort 3 sur deux ou trois, et préférentiellement, tous les fils de renfort 3, sont torsadés individuellement selon une torsion de 3 à 15 tours/m, de préférence de 6 à 12 tours/m. Il doit être compris que selon une variante avantageuse de réalisation, tous les fils de renfort 3 formant la nappe unidirectionnelle de renfort 2, sont torsadés individuellement selon une torsion de 3 à 15 tours/m, de préférence de 6 à 12 tours/m. Dans le cas où la nappe unidirectionnelle de renfort 2 ne comportent pas exclusivement des fils de renfort torsadés, alors la nappe unidirectionnelle de renfort 2 comporte avantageusement, des fils de renfort correspondant aux fils de renfort utilisés pour subir une torsion conformément à l'invention mais non torsadés.

Selon une variante de l'invention dans laquelle tous les fils de renfort 3 formant la nappe unidirectionnelle 2 sont torsadés, il est également possible d'utiliser au sein d'une même nappe, à la fois un fil ou plusieurs fil(s) de renfort 3 torsadé(s) dont la torsion est de type S et un fil ou plusieurs fil(s) de renfort 3 torsadé(s) dont la torsion est de type Z. C'est-à-dire que la nappe unidirectionnelle 2 comporte des fils de renfort 3 torsadés dont le sens de torsion est différent : elle n'est donc pas uniquement formée de fils de renfort 3 de torsion Z ou de fils de renfort 3 de torsion S, mais comporte au moins un fil de renfort 3 de torsion Z, s'étendant à côté d'un ou plusieurs fils de renfort 3 de torsion S, ou bien comporte au moins un fil de renfort 3 de torsion S, s'étendant à côté d'un ou plusieurs fils de renfort 3 de torsion Z. Par contre, chaque fil présente une même torsion S ou Z et donc un même sens de torsion sur toute sa longueur, ainsi qu'une même valeur de torsion.

Ces variantes de nappes unidirectionnelles de renfort 2 sont nommées dans la présente description « nappes unidirectionnelles 2 mixtes S/Z », par souci de simplicité. L'obtention d'un fil de renfort 3 torsadé avec une torsion de type S ou d'un fil de renfort 3 torsadé avec une torsion de type Z est conditionnée par le sens de rotation appliqué autour de l'axe B à la bobine 7, dans une retordeuse telle qu'illustrée sur la figure 3. En utilisant différents types de fils de renfort 3 torsadés au sein d'une même nappe unidirectionnelle de renfort 2, à savoir au moins un avec une torsion de type S et au moins un avec une torsion de type Z, il est possible de limiter les risques d'apparition de défauts au sein de la nappe unidirectionnelle de renfort 2 obtenue, notamment les risques de gap ou chevauchement entre les fils déposés côte à côte, tout comme les risques d'ondulation. L'utilisation des deux types de torsion S et Z, au sein d'une même nappe unidirectionnelle, a tendance à homogénéiser les ondulations locales induites pas les torsions Z et S, qui sont de directions différentes. En mixant au sein d'une même nappe unidirectionnelle ces deux types de fils, la fabrication et l'utilisation des nappes mixtes S et Z est rendue plus simple et tend à une qualité plus acceptable, en termes de fente (également nommé espacement ou gap) et chevauchement observés au sein de la nappe produite, comme cela ressortira des exemples qui vont suivre.

A titre d'exemples d'enchainement de fils de renfort torsadé 3, déposés côte à côte, pour former une nappe unidirectionnelle 2 mixte S/Z, qui sont particulièrement adaptés, on peut citer les enchaînements suivants : SZ, SZS, ZSZ, SZZS, SZSZ, SZSZS, SSZZSS, SZSSZS, SZSZSZ SSZZSSZZ.

Comme illustré sur les figures 1B et 1C, une nappe unidirectionnelle 2 (ou 2a) formée de plusieurs fils de renfort 3 de carbone peut être divisée en deux parties égales s'étendant chacune de part et d'autre d'un plan Δ s'étendant perpendiculairement à la surface de ladite nappe unidirectionnelle 2 (et donc s'étendant perpendiculairement aux surfaces $S_4$ et $S_5$ des deux voiles 4,5, lorsque la nappe est associée à ces derniers) et parallèlement à la direction générale d'extension de la nappe unidirectionnelle 2. Selon une variante particulièrement avantageuse des matériaux de renfort selon l'invention, les nappes unidirectionnelles 2 (du type mixtes S/Z) comprennent plus de 3 fils de renfort 3 de carbone torsadés individuellement selon une torsion de 3 à 15 tours/m, de préférence de 6 à 12 tours/m, avec :

- dans le cas où le nombre total de fils de renfort 3 de carbone torsadés formant la nappe unidirectionnelle 2 est pair :

   o le nombre de fils de renfort 3 de carbone torsadés de torsion S d'un côté du plan Δ et le nombre de fils de renfort 3 de carbone torsadés de torsion S de l'autre côté du plan Δ qui sont, chacun indépendamment, un entier qui appartient à la gamme {[(nombre total de fils)/4] - 35 % ; [(nombre total de fils)/4] + 35 %}, chaque borne de la gamme étant arrondie à l'entier le plus proche si la formule la définissant ne conduit pas à un entier, les autres fils de renfort 3 de carbone torsadés étant des fils de torsion Z (définition P1) ;

   o ce qui est équivalent à dire que le nombre de fils de renfort 3 de carbone torsadés de torsion Z d'un côté du plan Δ et le nombre de fils de renfort 3 de carbone torsadés de torsion Z de l'autre côté du plan Δ, sont, chacun indépendamment, un entier qui appartient à la gamme {[(nombre total de fils)/4] - 35 % ; [(nombre total de fils)/4] + 35 %}, chaque borne de la gamme étant arrondie à l'entier le plus proche si la formule la définissant ne conduit pas à un entier, les autres fils de renfort 3 de carbone torsadés étant des fils de torsion S (définition P2);

- dans le cas où le nombre total de fils de renfort 3 de carbone torsadés formant la nappe unidirectionnelle 2 est impair :

   o le nombre de fils de renfort 3 de carbone torsadés de torsion S d'un côté du plan Δ et le nombre de fils de renfort 3 de carbone torsadés de torsion S de l'autre côté du plan Δ, qui sont soit deux entiers, soit deux entiers et demi, et sont, chacun indépendamment, dans la gamme {[(nombre total de fils)/4] - 35 % ; [(nombre total de fils)/4] + 35 %}, chaque borne de la gamme étant arrondie à l'entier ou l'entier et demi le plus proche si la formule la définissant ne conduit pas à un entier ou à un entier et demi, les autres fils de renfort 3 de carbone torsadés étant des fils de torsion Z (définition I1);

   o ce qui est équivalent à dire que le nombre de fils de renfort 3 de carbone torsadés de torsion Z d'un côté du plan Δ et le nombre de fils de renfort 3 de carbone torsadés de torsion Z de l'autre côté du plan Δ, sont soit deux entiers, soit deux entiers et demi, et sont, chacun indépendamment, dans la gamme {[(nombre total de fils)/4] - 35 % ; [(nombre total de fils)/4] + 35 %}, chaque borne de la gamme étant arrondie à l'entier ou l'entier et demi le plus proche si la formule la définissant ne conduit pas à un entier ou à un entier et demi, les autres fils de renfort 3 de carbone torsadés étant des fils de torsion S (définition I2).

Le plan Δ est le plan parallèle à la direction générale d'extension de ladite nappe unidirectionnelle 2 qui partage ladite nappe unidirectionnelle en deux parties égales, en étant perpendiculaire à sa surface. La figure 1C illustre un matériau selon l'invention comprenant une nappe unidirectionnelle 2a formée d'une série de fils de renfort 3 torsadés SZSZSZ, sur laquelle le plan Δ est représenté.

Par « sont, chacun indépendamment, dans la gamme » dans les définitions P1, P2, I1 et I2, on entend que les deux nombres concernés appartiennent à la gamme, mais peuvent être identiques ou différents.

A titre d'exemples de configurations possibles dans le cas d'un nombre total impair de fils de renfort 3 torsadés formant une nappe unidirectionnelle 2, si ce nombre total de fils de renfort 3 torsadés est 17 (il y a donc 8,5 fils de part et d'autre du plan Δ), alors :

- selon la définition I1, la gamme {[(nombre total de fils)/4] - 35 % ; [(nombre total de fils)/4] + 35 %} est égale à {[(17/4) - 35 % ; [(17)/4] + 35 %} = {4,25-35%(4,25) ; 4,25+35%(4,25)} qui après arrondissement des bornes donne {3 ; 5,5}. Il peut donc il y avoir 3 à 5,5 fils S de chaque côté du plan Δ, soit 6 à 11 fils S au total, les autres fils étant des fils Z, soit 6 à 11 fils Z au total, avec 3 à 5,5 fils Z de chaque côté du plan Δ ;
- selon la définition I2, on arrive aux mêmes nombres de fils S et Z possibles de chaque côté du plan Δ.

Avec de telles configurations, le nombre de fils de renfort 3 de torsion S et le nombre de fils de torsion Z au sein de la nappe unidirectionnelle de renfort 2 sont plus équilibrés, ce qui conduit à des nappes unidirectionnelles 2 plus faciles à fabriquer et de meilleure qualité. En effet, dans de tels cas, l'alignement entre les fils de renfort 3 torsadés est facilité et on observe une réduction des gaps, des ondulations et/ou des chevauchement entre les fils de renfort 3 torsadés déposés parallèlement et côte à côte, lors de la constitution de la nappe unidirectionnelle de renfort 2, comme expliqué dans les exemples. De plus, lors de la production automatisée de plusieurs matériaux de renfort 1, en parallèle, comme décrit dans la demande WO 2010/061114, le découpage des non-tissés à la jonction entre deux matériaux de renfort 1 produits en parallèle, conduit, dans ce cas, à des bords plus nets et des matériaux plus homogènes.

Par ailleurs, le matériau de renfort 1 produit à partir de telles nappes mixtes S/Z, sera, de ce fait, lui aussi de meilleure qualité et ainsi les pièces composites produites également. De plus, la dépose grâce à des dispositifs de dépose automatisés, tels que décrits dans la demande EP 2 376 276 peut être plus précise avec de tels matériaux de renfort. Comme cela sera expliqué dans les exemples, de tels matériaux de renfort 1 restent mieux centrés dans les guides ou organes de guidage (du type gorge, peigne notamment) présents au niveau des têtes ou doigts de dépose des dispositifs de dépose automatisés, alors que des matériaux de renfort 1 constitués à partir de nappe unidirectionnelle de renfort 2, ne comportant que des fils de renfort 3 de torsion S ou que des fils de renfort 3 de torsion Z, ou plus généralement ne répondant pas aux définitions P1, P2, I1 et I2, ont tendance à se décentrer et à venir en butée sur les bords des guides ou organes de guidage sur lesquels ils circulent.

En particulier, les nappes unidirectionnelle de renfort 2 comprenant un enchaînement de fils de renfort 3 de torsion S et de torsion Z totalement alternés seront privilégiées, à savoir celles correspondant aux configurations (enchaînement de fils déposés cote à cote) (SZ)i, S(ZS)j, Z(SZ)j, avec i et j qui sont des entiers appartenant notamment à la gamme allant de 1 à 20, de préférence à la gamme allant de 1 à 10. En particulier, i et j seront dans la gamme allant de 2 à 20, de préférence à la gamme allant de 2 à 10.

D'autres configurations de nappes unidirectionnelles mixtes S/Z qui sont particulièrement satisfaisantes sont celles qui présentent le même nombre de fils S, et donc par voie de conséquence, le même nombre de fils Z également, de part et d'autre du plan Δ. Les configurations suivantes en sont quelques exemples : SZZS, SZSZ, SZSZS, SZSSZS.

D'autres configurations de nappes unidirectionnelles mixtes S/Z qui sont particulièrement satisfaisantes sont celles symétriques par rapport au plan Δ. Les configurations suivantes en sont quelques exemples : SZZS, SZSZS, SZSSZS, SZSSZSSZS.

Ainsi, l'utilisation de nappes unidirectionnelles mixtes S/Z, et en particulier celles plus précisément décrites dans le cadre de l'invention, résout un double problème technique, à la fois lors de la fabrication et lors de la dépose du matériau de renfort 1 obtenu. Ces matériaux offrent, en particulier, la possibilité d'être produits et déposés selon des procédés industriels.

L'utilisation de nappes unidirectionnelles mixtes S/Z, et en particulier celles plus précisément décrites dans le cadre de l'invention est particulièrement adaptée à la réalisation de nappe unidirectionnelles 2, et donc de matériaux de renfort 1, présentant une largeur supérieure à 7 mm, de préférence, supérieure à 12 mm, et de préférence dans la gamme allant de 12 à 51 mm. Par ailleurs, l'invention mettant en oeuvre une nappe unidirectionnelle mixte S/Z est également adaptée tout particulièrement à des matériaux de renfort, qui ont une longueur supérieure à 2 m, notamment une longueur de 2 à 5000 m, de préférence de 100 à 2000 m. Ainsi, selon de tels modes de réalisation préférés dans le cadre de l'invention, les matériaux de renfort selon l'invention présentent une largeur supérieure à 7 mm et une longueur supérieure à 2 m, et avantageusement une largeur dans la gamme allant de 12 à 51 mm et une longueur dans la gamme allant de 2 à 5000 m, de préférence, allant de 100 à 2000 m. La largeur du matériau est sa largeur moyenne prise perpendiculairement à la direction générale d'extension de la nappe unidirectionnelle : la largeur peut être mesurée à l'aide de tout moyen approprié, notamment une caméra, en effectuant des mesures tous les 10 cm, et ce sur toute la longueur du matériau, et en effectuant la moyenne arithmétique des mesures obtenues. La longueur du matériau, sera, de préférence, mesurée, au niveau du plan Δ. En particulier, la largeur du matériau de renfort 1 peut être mesurée en le faisant défiler à une vitesse constante de 1,2m par minute, avec une tension constante comprise entre 200 et 400cN, et en le faisant passer, à une distance de 265mm et sans support à cet endroit, devant une caméra, par exemple du type modèle Baumer Optronic Type FWX 20, focale 20mm, 1624x1236 pixels (Baumer Optronic Gmbh, Allemagne - la calibration de la caméra est la suivante : 1 pixel équivaut à 0.05mm) ou une autre caméra adaptée à des largeurs plus importantes de matériau de renfort.. En particulier, des dispositifs de dépose automatisés existent pour déposer des matériaux d'une largeur de 6,35 ; 12,7 ; 38,1 et 50,8 mm et pourront être mis en oeuvre dans le cadre de l'invention.

Par ailleurs, cette variante de l'invention utilisant une nappe unidirectionnelle mixte S/Z, est particulièrement adaptée pour la production du matériau de renfort 1 en réalisant l'association des non-tissés sur chacune des faces de la nappe unidirectionnelle de renfort, en continu, et ce en faisant défiler le matériau de renfort en cours de fabrication, grâce à un système ou dispositif de convoyage motorisé.

De façon avantageuse, chaque fil de renfort 3 torsadé rentrant dans la constitution de la nappe unidirectionnelle de renfort 2 présente une valeur de torsion sensiblement identique sur toute sa longueur. Il est à noter que tous les fils de renfort 3 torsadés qui rentrent dans la constitution de la nappe unidirectionnelle de renfort 2, peuvent posséder une valeur de torsion identique ou différente. De préférence, tous les fils de renfort 3 torsadés qui rentrent dans la constitution de la nappe unidirectionnelle de renfort 2 possèdent une valeur de torsion identique.

Dans le cadre de l'invention, la nappe unidirectionnelle de renfort 2 présente un grammage dans la gamme allant de 126 à 280g/m$^2$, notamment de 126 à 210 et préférentiellement de 210 à 280 g/m$^2$.

Le grammage de la nappe unidirectionnelle, au sein du matériau de renfort correspond à celle de la nappe unidirectionnelle avant son association avec les voiles, mais il n'est pas possible de mesurer le grammage de la nappe unidirectionnelle avant son association avec les voiles 4, 5 car les fils de renfort n'ont aucune cohésion entre eux. Le grammage de la nappe de fibres de renfort de carbone peut être déterminé à partir du grammage du matériau de renfort 1 (nappe unidirectionnelle 2 et les deux voiles 4, 5). Si l'on connaît la masse surfacique des voiles, il est alors possible de déduire la masse surfacique de la nappe unidirectionnelle. De façon avantageuse, la masse surfacique est déterminée à partir du matériau de renfort par attaque chimique (éventuellement également par pyrolyse) du voile. Ce type de méthode est classiquement utilisé par l'homme du métier pour déterminer le taux de fibres de carbone d'un tissu ou d'une structure composite.

On décrit ci-après une méthode de mesure du grammage du matériau de renfort 1. Le grammage du matériau de renfort est mesuré par pesée d'échantillons découpés de 100 cm$^2$ (c'est-à-dire de 113 mm de diamètre). Pour faciliter la découpe des échantillons de matériau de renfort qui est souple, le matériau de renfort est placé entre deux cartons lustrés de la société Cartonnage Roset (Saint Julien en Genevois, France) de 447 g/m$^2$ et de 0,450 mm d'épaisseur pour assurer une certaine rigidité de l'ensemble. Un emporte-pièce circulaire pneumatique de la société Novi Profibre (Eybens, France) est utilisé pour découper l'ensemble ; 10 échantillons sont prélevés par type de produit de renfort fabriqué.

Il ressort de la description qui précède que le matériau de renfort 1 est avantageusement constitué d'une nappe unidirectionnelle de renfort 2 associée sur chacune de ses faces, à un voile ou une couche de fibres polymériques 4, 5 choisies parmi les non-tissés. D'une manière générale, le procédé de préparation du matériau de renfort 1 conforme à l'invention comprend les étapes successives suivantes :

a1) disposer d'une nappe unidirectionnelle de renfort formée d'un ou plusieurs fils de renfort 3 torsadé(s) individuellement selon une torsion de 3 à 15 tours/m,

a2) disposer d'au moins deux couches de fibres polymériques 4, 5 choisies parmi les non-tissés,

a3) procéder à l'association de chacune des couches de fibres polymériques à chacune des faces de la nappe unidirectionnelle de renfort.

En général, la nappe unidirectionnelle de renfort 2 de l'étape a1) aura un grammage égal à celui souhaité dans le matériau de renfort 1 final et une largeur égale à la largeur souhaitée pour le matériau de renfort 1 final.

Avantageusement, le procédé de préparation comprend en amont de l'étape a1), une étape de réalisation de la nappe unidirectionnelle de renfort 2 comprenant l'application d'une torsion de 3 à 15 tours/m à un fil ou à une série de fils de renfort 3, ladite torsion étant appliquée à chaque fil de renfort 3 de manière individuelle.

Selon une variante de réalisation du procédé de préparation, la nappe unidirectionnelle de renfort 2 est formée de plusieurs fils de renfort et le procédé comprend, en amont de l'étape a1) :

i) l'application d'une torsion de 3 à 15 tours/m à une série de fils de renfort, ladite torsion étant appliquée à chaque fil de manière individuelle,

ii) alignement des fils torsadés ainsi obtenus, éventuellement avec d'autres fils de renfort, et disposition côte à côte desdits fils, de manière à former une nappe unidirectionnelle de renfort.

Dans le cas d'une nappe constituée exclusivement de fils de renfort 3 torsadés, l'utilisation de fils ne présentant pas tous le même type de torsion S ou Z permet de faciliter l'alignement et la disposition des fils lors de l'étape ii). Ainsi à l'étape ii), de manière avantageuse, le choix des fils qui sont alignés sera effectué pour obtenir une des nappes unidirectionnelles mixtes S/Z telles que décrites dans la présente invention.

Ainsi, selon un mode de réalisation, le procédé de préparation du matériau de renfort 1 conforme à l'invention comprend les étapes successives suivantes :

a1) disposer d'une nappe unidirectionnelle de renfort telle que définie dans le cadre de l'invention, nommée nappe unidirectionnelle mixte S/Z,

a2) disposer de deux couches polymériques qui sont des non-tissés 4, 5,

a3) procéder à l'association de chacun des non-tissés, sur une des faces de la nappe unidirectionnelle de renfort.

Avantageusement, le procédé de préparation comprend en amont de l'étape a1), une étape de réalisation de la nappe unidirectionnelle de renfort 2 comprenant, d'une part, l'application d'une torsion de 3 à 15 tours/m à un fil ou à une série de fils de carbone 3 selon une torsion S, ladite torsion étant appliquée à chaque fil de carbone 3 de manière individuelle et, d'autre part, l'application d'une torsion de 3 à 15 tours/m à un fil ou à une série de fils de carbone 3 selon une torsion Z, ladite torsion étant appliquée à chaque fil de carbone 3 de manière individuelle.

Selon une caractéristique avantageuse, les couches de fibres polymériques 4, 5 qui sont des non-tissés ont un caractère collant à chaud et l'association de l'étape a3) est obtenue par application de chacune des couches de fibres polymériques sur chacune des faces de la nappe unidirectionnelle de renfort, ladite application étant accompagnée ou suivie d'un chauffage des fibres polymériques, entraînant leur ramollissement ou leur fusion, lui-même suivi d'un refroidissement.

La nappe unidirectionnelle 2 est associée, sur chacune de ses faces, à un voile de fibres polymériques 4, 5 pour conduire à un matériau de renfort 1 tel que schématisé à la figure 1A. L'utilisation d'un matériau de renfort symétrique permet d'éviter toute erreur d'empilement, lors de sa dépose manuelle ou automatique pour la constitution de pièces composites, et donc de limiter la génération de défauts, notamment d'un interpli sans voile. C'est pourquoi, de manière avantageuse, la nappe unidirectionnelle 2 est associée, sur chacune de ses faces, à un voile de fibres polymériques 4, 5, les deux voiles 4, 5 étant identiques.

Par « couche poreuse polymérique », on entend une couche perméable permettant de laisser passer un liquide tel qu'une résine qui serait injectée ou infusée au travers du matériau lors de la constitution d'une préforme ou d'une pièce composite. En particulier, le facteur d'ouverture d'une telle couche déterminé selon la méthode décrite dans la demande WO 2011/086266, appartient à la gamme allant de 30 à 99%, de préférence à la gamme allant de 40 à 70%. Les non-tissés ou voiles sont des exemples particulièrement avantageux de telles couches.

Dans le cadre de l'invention, par « couches de fibres polymériques », on entend un voile ou un non-tissé.

Par « non-tissé » ou « voile », on entend classiquement un ensemble de fibres continues ou courtes potentiellement disposées aléatoirement. Ces non-tissés ou voiles pourront, par exemple, être produits par les procédés voie sèche (« Drylaid »), voie humide (« Wetlaid »), par voie fondue (« Spunlaid »), par exemple par extrusion (« Spunbond »), extrusion soufflage («Meltblown »), par projection fondue (fiberized spray applicator) ou par filage avec solvant (« electrospinning », « Flashspining », « Forcespinning »), bien connus de l'homme du métier. En particulier, les fibres constitutives du non-tissé peuvent présenter un diamètre moyen compris dans la gamme allant de 0,5 à 70 $\mu$m, et préférentiellement de 0,5 à 20 $\mu$m. Les non-tissés peuvent être constitués de fibres courtes ou, de préférence, de fibres continues. Dans le cas d'un non-tissé de fibres courtes, les fibres peuvent présenter, par exemple, une longueur comprise entre 1 et 100 mm. De manière préférée, les non-tissés utilisés offrent une couverture aléatoire et, de préférence, isotropique.

Dans le cadre de l'invention, les matériaux de renfort étant qualifiés de sec, la masse totale que représente les non-tissés 4 et 5 est au plus égale à 10% de la masse totale du matériau de renfort 1 selon l'invention, typiquement, représente de 0,5 à 10% de la masse totale du matériau de renfort 1, et préférentiellement de 2 à 6% de sa masse totale.

Dans le cadre de l'invention, les non-tissés ou voiles utilisés ont, avantageusement, un caractère thermoplastique, et, sont notamment, constitués d'un polymère thermoplastique, d'un polymère thermoplastique partiellement réticulé, d'un mélange de tels polymères, ou d'un mélange de polymères thermoplastique et thermodurcissable. Les non-tissés ou voiles de matière thermoplastique ou thermodurcissable est (sont), de préférence, en une matière thermoplastique choisie parmi : les Polyamides (PA : PA6, PA12, PA11, PA6,6, PA 6,10, PA 6,12, ...), Copolyamides (CoPA), les Polyamides - block ether ou ester (PEBAX, PEBA), polyphtalamide (PPA), les Polyesters (Polyéthylène téréphtalate - PET-, Polybutylène téréphtalate - PBT-...), les Copolyesters (CoPE), les polyuréthanes thermoplastiques (TPU), les polyacétales (POM...), les Polyoléfines (PP, HDPE, LDPE, LLDPE....), Polyéthersulfones (PES), les polysulfones (PSU...), les polyphénylènes sulfones (PPSU...), PolyétheretherCétones (PEEK), PolyétherCétoneCétone (PEKK), Poly(Sulfure de Phénylène) (PPS), ou Polyétherimides (PEI), les polyimides thermoplastiques, les polymères à cristaux liquides (LCP), les phenoxys, les copolymères à blocs tels que les copolymères Styrène-Butadiene-Méthylméthacrylate(SBM), les copolymères Méthylméthacrylate-Acrylate de Butyl-Méthylméthacrylate (MAM) ou un mélange de fibres constituées de ces matériaux thermoplastiques. La matière est bien entendue adaptée aux différents types de systèmes thermodurcissables utilisés pour la constitution de la matrice, lors de la réalisation ultérieure des pièces composites.

L'épaisseur des voiles avant leur association à la nappe unidirectionnelle sera choisie, en fonction de la façon dont ils vont être associés à la nappe unidirectionnelle. Le plus souvent, leur épaisseur sera très proche de l'épaisseur souhaitée sur le matériau de renfort. Il peut également être possible de choisir d'utiliser un voile d'épaisseur plus importante qui sera laminé sous température lors de l'étape d'association, de manière à atteindre l'épaisseur voulue. De façon préférée, la nappe unidirectionnelle est associée sur chacune de ses grandes faces à deux voiles sensiblement identiques, de façon à obtenir un matériau de renfort parfaitement symétrique. L'épaisseur du voile avant association sur la nappe unidirectionnelle de carbone est, notamment, comprise entre 0,5 et 200 $\mu$m, préférentiellement entre 10 et 170 $\mu$m. Sur le matériau de renfort 1 selon l'invention, l'épaisseur de chaque voile 4, 5 après association avec la nappe unidirectionnelle, est comprise dans la gamme allant de 0,5 à 50 microns, de préférence dans la gamme allant de 3 à 35 microns. L'épaisseur des différents non-tissés avant association est déterminée par la norme NF EN ISO 9073-2 en utilisant la méthode A avec une aire d'essai de 2827 mm$^2$ (disque de 60 mm de diamètre) et une pression appliquée de 0,5 kPa.

Par ailleurs, de façon avantageuse, la masse surfacique des voiles 4,5 est comprise dans la gamme allant de 0,2 à 20 g/m$^2$.

L'association entre la nappe unidirectionnelle 2 et les voiles 4,5 peut être réalisée de manière discontinue, par exemple uniquement en certains points ou zones, mais est, de préférence, réalisée selon une liaison qui s'étend sur la totalité de la surface de la nappe, qualifiée de continue.

L'association de la nappe unidirectionnelle 2 aux deux voiles 4,5 est réalisée avantageusement selon le procédé décrit dans la demande de brevet WO 2010/046609 ou l'un des procédés décrits dans la demande WO 2010/061114. Des machines et lignes de production en continu, telles que décrites dans ces documents, ou dans les exemples de l'invention pourront être utilisés. Dans le cadre de l'invention, et en particulier lorsqu'une nappe unidirectionnelle mixte S/Z est utilisée, il est possible de produire des matériaux de renfort en réalisant l'association des non-tissés présents sur chacune des faces de la nappe unidirectionnelle de renfort, en continu, et ce en faisant défiler le matériau de renfort résultant de la dite association, grâce à un système ou dispositif de convoyage motorisé. De tels dispositifs sont notamment des tapis de défilement, par exemple, actionnés par un ou plusieurs rouleaux d'entrainement, entre lesquels le matériau de renfort circule, une fois que la nappe unidirectionnelle a été disposée entre les deux non-tissés, pour assurer leur application sur cette dernière.

Par ailleurs, l'association de la nappe unidirectionnelle aux deux voiles peut se faire par l'intermédiaire d'une couche adhésive, par exemple choisie parmi les adhésifs époxydes, adhésifs polyuréthane, les colles thermodurcissables, les adhésifs à base de monomère polymérisables, les adhésifs acryliques structuraux ou acryliques modifiés, les adhésifs hot-melt. Mais, le plus souvent l'association sera réalisée grâce au caractère collant que présentent les voiles à chaud, par exemple lors d'une étape de thermocompression permettant d'assurer une liaison entre la nappe unidirectionnelle et les voiles. Cette étape entraine le ramollissement des fibres thermoplastiques du voile, permettant de solidariser la nappe unidirectionnelle aux voiles, après refroidissement. Les conditions de chauffage et de pression, seront adaptées au matériau constitutif des voiles et à leur épaisseur. Le plus souvent une étape de thermocompression sur toute la surface de la nappe unidirectionnelle à une température comprise dans la gamme allant de Tf voile - 15°C et Tf voile + 60°C (avec Tf voile qui désigne la température de fusion du voile) et sous une pression de 0,1 à 0,6 MPa sera réalisée. Il est, ainsi, possible d'atteindre des taux de compression du voile avant et après association allant de 1 à 10. L'étape de contre-collage du voile sur la nappe unidirectionnelle 2 de carbone est également déterminante pour maîtriser correctement l'épaisseur finale du matériau de renfort 1. En effet, en fonction des conditions de température et de pression, notamment lors du contre-collage, il est possible de modifier, et donc d'ajuster, l'épaisseur du voile présent de chaque côté dans le matériau de renfort.

Le matériau de renfort selon l'invention présente une bonne manipulabilité, du fait de la présence des voiles thermoplastiques contre-collés sur chacune des faces de la nappe unidirectionnelle. Cette architecture autorise également une découpe aisée, sans effilochage notamment, selon des directions non parallèles, notamment transversale ou oblique, aux fibres de la nappe unidirectionnelle.

Les matériaux de renfort 1 selon l'invention sont souples et enroulables. Ils peuvent être produits selon des grandes longueurs correspondant aux longueurs disponibles de fils de carbone. Le plus souvent, après leur fabrication, ils sont enroulés sous la forme de rouleau autour d'une bobine, avant d'être utilisés pour la fabrication ultérieure de préformes et pièces.

Pour la réalisation de pièces composites, un empilement ou drapage de matériaux de renfort selon l'invention (également nommés plis) est réalisé. De manière classique, un matériau de renfort selon l'invention est découpé à la dimension souhaitée, pour la réalisation de la pièce, du pli, de l'empilement ou de la préforme à réaliser. Dans un empilement, plusieurs plis de matériaux de renfort sont empilés, les uns sur les autres.

Un pli peut être constitué d'un seul matériau de renfort selon l'invention, lorsque celui-ci a une largeur suffisante pour la réalisation de la pièce souhaitée et que la pièce est peu complexe. Mais le plus souvent, dans le cas de pièces de grande dimension, ou de pièces complexes, un pli est constitué d'un ensemble de matériaux de renfort 1 selon l'invention qui sont disposés côte à côte, pour couvrir toute la surface nécessaire à la réalisation de la pièce souhaitée. Dans ce cas, un placement précis du matériau de renfort, doit être réalisé. Dans les procédés automatisés, les dispositifs d'acheminement et de dépose des matériaux de renfort comprennent un ou plusieurs organe(s) de guidage ou guide(s) dans le(s)quel(s), le matériau de renfort est acheminé et véhiculé. Des dispositifs comprenant des têtes de dépose équipées de tels organes de guidage ou guides sont, notamment, décrits dans les documents WO 2006/092514 et EP 2 376 276. Les sociétés Coriolis Composites SASU (rue Condorcet 56530 Queven, FRANCE), MTorres Disenos Industriales SAU (Torrez de Elorz, Navarra, ESPAGNE) ElectroImpact Inc (Mukilteo WA 98275, ETATS-UNIS), Mikrosam DOO (7500 Prilep MACEDOINE) proposent également de tels dispositifs. Dans le cadre de l'invention, il a été constaté que le centrage des matériaux de renfort 1 selon l'invention comprenant une nappe unidirectionnelle mixte S/Z, et en particulier une de celles plus précisément décrites dans le cadre de l'invention, conduisait à un placement plus précis et donc à une réduction des risques de défauts de type gap, chevauchement, plissures ou ondulations, lors de la dépose. Ainsi, les pièces réalisées avec des matériaux de renfort 1 selon l'invention comprenant une nappe unidirectionnelle mixte S/Z, et en particulier une de celles plus précisément décrites dans le cadre de l'invention, sont particulièrement satisfaisantes.

Par ailleurs, pour la réalisation d'une pièce composite, plusieurs plis, l'un sur l'autre, sont réalisés pour conduire à un empilement de plis. Ainsi, les imperfections sur les matériaux de renfort 1 se reproduisent dans chaque pli et sont donc accentués sur un empilement. C'est pourquoi, là encore, les matériaux de renfort 1 selon l'invention comprenant une nappe unidirectionnelle mixte S/Z qui ont des caractéristiques plus homogènes et reproductibles sont particulièrement avantageux. Dans l'empilement obtenu, les plis sont en général disposés, de manière à orienter au moins deux nappes unidirectionnelles des plis selon des directions différentes. D'un pli à l'autre, toutes les nappes unidirectionnelles peuvent avoir des directions différentes ou seulement certaines d'entre elles, les autres pouvant avoir des directions identiques. Les orientations privilégiées sont le plus souvent, orientées dans les directions faisant un angle de 0°, + 45° ou - 45° (correspondant également à +135°), et +90° avec l'axe principal de la pièce à réaliser. L'axe principal de la pièce est généralement le plus grand axe de la pièce et le 0° se confond avec cet axe. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°. A titre d'exemples d'empilement symétrique, on peut citer 0°/90°/0°, ou 45°/135°/45°. Avant ajout de la résine nécessaire à la réalisation de la pièce, il est possible de solidariser les plis entre eux au sein de l'empilement, notamment par une étape intermédiaire de préformage en température et sous vide ou de soudage en quelques points à chaque ajout de pli, et ainsi réaliser une préforme. En particulier, on pourra envisager l'assemblage de 2 à 300 plis, notamment de 16 à 100 plis.

De façon avantageuse, l'empilement n'est pas solidarisé par couture, ni par tricotage, mais par une soudure réalisée grâce au caractère polymérique, et en particulier thermoplastique des voiles présents au sein de l'empilement. Pour cela, une opération de chauffage/refroidissement est réalisée sur la totalité de la surface de l'empilement ou au moins en certaines zones de la surface de l'empilement. Le chauffage entraine la fusion ou du moins le ramollissement du voile. Une telle liaison utilisant le caractère thermoplastique du voile est avantageuse car elle permet d'éviter tous les inconvénients que présente la présence de fils de couture ou tricotage, tels que notamment les problèmes d'ondulation, de microfissuration, la baisse des propriétés mécaniques au niveau des pièces composites ultérieurement obtenues.

Il est possible de réaliser l'empilement en ajoutant, un à un, chaque pli et en assurant la liaison, après chaque ajout de pli. On peut notamment citer la dépose de pli automatisé telle que décrite dans les demandes de brevet WO 2014/076433 et WO 2014/191667. Également, les plis déposés (par chauffage préalable des plis un à un ou non) pourront être chauffés à nouveau de façon globale afin d'obtenir par exemple une préforme en forme à partir de plis déposés à plat. L'homme de l'art pourra alors utiliser les moyens conventionnels de formage à chaud, avec application de température et de pression (vide ou système de presse par exemple). En particulier, le dépôt d'un matériau de renfort selon l'invention peut être réalisé en continu avec application d'une pression perpendiculaire à la surface de dépose afin de l'appliquer sur celle-ci, selon les procédés connus sous les abréviations AFP (de l'anglais Automated Fiber Placement, Placement automatique de fibres) ou ATL (de l'anglais Automated Tape Lay-up, Mise en place automatique de ruban) par exemple décrits dans les documents WO 2014/076433 A1 ou WO 2014/191667 déjà cités.

Pour la réalisation des pièces composites, une résine ou matrice, de type thermodurcissable, thermoplastique ou un mélange de résines thermodurcissable et thermodurcissable est alors ajoutée, par exemple par injection dans le moule contenant les plis (procédé "RTM", de l'anglais Resin Transfer Moulding), ou par infusion (au travers de l'épaisseur des plis : procédé "LRI", de l'anglais Liquid Resin Infusion ou procédé "RFI", de l'anglais Resin Film Infusion). Selon une variante non préférée, il est également possible de réaliser, en amont de la réalisation de l'empilement une enduction/imprégnation manuelle au rouleau ou au pinceau, sur chacun des plis, appliqués de manière successive sur la forme du moule utilisé.

La matrice utilisée est de type thermodurcissable, thermoplastique ou un mélange de résines thermoplastique et thermodurcissable. La résine injectée sera, par exemple choisie parmi les polymères thermodurcissables suivants : les époxydes, les polyesters insaturés, les vinylesters, les phénoliques, les polyimides, les bismaléimides.

La pièce composite est ensuite obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous vide et plus forte dans le cas de l'injection dans un moule RTM.

Les modes de liaison d'empilement ci-dessus peuvent également être mis en oeuvre avec tout type de matériaux de renfort, destinés à être associé à une résine thermodurcissable pour la réalisation de pièces composites, qui sont constitués d'une nappe unidirectionnelle de fibres de carbone associée, sur chacune de ses faces, à un voile de fibres thermoplastiques et en particulier avec des matériaux de renfort autres que ceux définis dans les revendications de la présente demande de brevet. En effet, quelles que soient les voiles et nappes unidirectionnelles utilisées, de tels empilements, sont intéressant en termes de drapabilité et perméabilité. Bien entendu de façon préférée, les matériaux de renfort sont conformes, en termes d'épaisseur et de grammage, à ceux décrits dans le cadre de l'invention, étant donné qu'ils permettent d'atteindre, en infusion sous vide, des taux volumique de fibres (TVF) élevés.

Les exemples ci-dessous permettent d'illustrer l'invention, mais n'ont aucun caractère limitatif.

F0141] **PARTIE A**

Une première série d'essais a été réalisée conformément aux données présentées dans le tableau 3 ci-après.

Tableau 3

| Matériau | Matériau Comparatif 1 | Matériau Comparatif 2 | Matériau comparatif 3 | Matériau 4 selon l'invention | Matériau 5 selon l'invention | Matériau 6 selon l'invention | Matériau 7 selon l'invention | Matériau 8 selon l'invention | Matériau 9 selon l'invention |
|---|---|---|---|---|---|---|---|---|---|
| Fibres de renfort | Hexcel IMA 12k | | | | | | | | |
| Liant polymérique | 1R8 4 g/m² par face | | | | | | | | |
| Largeur de la nappe | 6,35mm | | | | | | | | |
| Nombre de fils de **carbone** | 3 | 3 | 4 | 3 | 3 | 3 | 3 | 4 | 4 |
| Masse surfacique des fibres de renfort de l'UD (g/m2) | 210 | 210 | 280 | 210 | 210 | 210 | 210 | 280 | 280 |
| Micro-perforation — Oui/non | Non | Oui | Oui | Non | Non | Non | Non | Non | Non |
| Oui/non | Non | Non | Non | Oui | Oui | Oui | Oui | Oui | Oui |
| Nombre de tours par mètre | - | • | - | 10 | 8 | 6 | 15 | 10 | 8 |
| Retordage — Nombre de fils retordus | - | - | - | Tous | Tous | Tous | 1 sur 3 | Tous | Tous |
| Sens de retordage | - | - | - | S | S | S | S | S | S |

| Matériau | Matériau 10 selon l'invention | Matériau 11 selon l'invention | Matériau 12 selon l'invention | Matériau 13 selon l'invention | Matériau 14 | Matériau 15 | Matériau 16 | Matériau 17 | Matériau 18 |
|---|---|---|---|---|---|---|---|---|---|
| Fibres de renfort | Hexcel IMA 12k | | | | | | | | |
| Liant polymérique | 1R8 4g/m² par face | | | | | | | | |
| Largeur de la nappe | 6,35mm | | | | | | | | |
| Nombre de fil de carbone | 5 | 5 | 6 | 3 | 3 | 4 | 4 | 5 | 5 |

(suite)

| Matériau | | Matériau 10 selon l'invention | Matériau 11 selon l'invention | Matériau 12 selon l'invention | Matériau 13 | Matériau 14 | Matériau 15 | Matériau 16 | Matériau 17 | Matériau 18 |
|---|---|---|---|---|---|---|---|---|---|---|
| Masse surfacique des fibres de renfort de l'UD (g/m2) | | 350 | 350 | 420 | 210 | 210 | 280 | 280 | 350 | 350 |
| Micro-perforation | | Non | Non | Non | Non | Non | Non | Non | Non | Non |
| Retordage | Oui/non | Oui | Oui | Oui | Oui | Oui | Oui | Oui | Oui | Oui |
| | Nombre de tours par mètre | 10 | 14 | 10 | 20 | 30 | 20 | 30 | 20 | 30 |
| | Nombre de fils retordus | Tous | Tous | Tous | Tous | Tous | Tous | Tous | Tous | Tous |
| | Sens de retordage | S | S | 5 | S | S | 5 | S | S | S |

Conformément, au tableau 3 ci-dessus, les matériaux de renfort 1 testés comportent des nappes unidirectionnelles de renfort associées à un voile de chaque côté.

Des fils de carbone de module intermédiaire (IM) en 12K commercialisés par la société HEXCEL Corporation, Stamford, CT USA sont utilisées dans la nappe unidirectionnelle de renfort. Les matériaux 1 à 3 utilisent de tels fils de renfort de carbone qui ne sont pas torsadés. Les matériaux 4 à 12 sont des matériaux de renfort conformes à l'invention comportant des fils de renfort de carbone torsadés individuellement comme expliqué précédemment (fils retordus). Les matériaux 13 à 18 sont des matériaux de renfort réalisés avec des fils torsadés présentant une torsion plus importante que celle envisagée dans le cadre de l'invention et ne pouvant pas être réalisés car le matériau se sépare soit à l'étape de la production soit à l'étape de la manipulation ou de la dépose le rendant inutilisable.

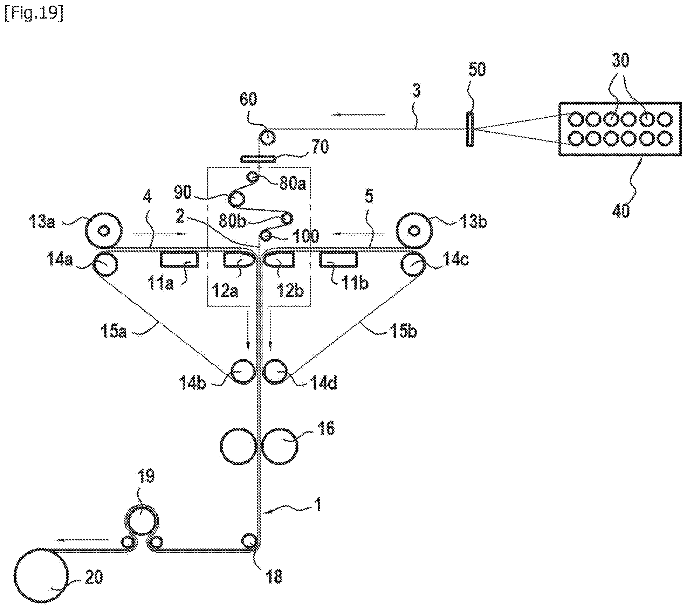

En tant que couches de fibres polymériques choisies parmi les non-tissés est utilisé le non-tissé 1R8 D04 en copolyamide de 4g/m$^2$ commercialisé par la société Protechnic. Les voiles sont associés à la nappe unidirectionnelle de fils de renfort de carbone conformément à la demande de brevet WO 2010/046609. De manière plus précise, les matériaux de renfort 1 selon l'invention ont été réalisés avec une ligne de production utilisant une machine et les paramètres tels que décrits dans la demande WO 2010/061114 et re-détaillés ci-après, en référence à la figure 19.

Les fils de carbone 3 de la torsion souhaitée sont déroulés à partir de bobines correspondantes 30 de fils de carbone fixées sur un cantre 40, passent au travers d'un peigne 50, sont conduits dans l'axe de la machine à l'aide d'un rouleau de guidage 60, d'un peigne 70 et d'une barre de guidage 80a.

Les fils de carbone 3 sont préchauffés à l'aide d'une barre chauffante 90 et sont étalés ensuite grâce à la barre d'étalement 80b et la barre chauffante 100 à la masse surfacique de carbone souhaitée pour la nappe unidirectionnelle 2. Les rouleaux 13a et 13b de voiles 4 et 5 sont déroulés sans tension et transportés à l'aide de tapis continus 15a et 15b fixés entre les rouleaux libres en rotation et non motorisés 14a, 14b, 14c, 14d et les barres chauffées 12a, 12b.

Les voiles 4 et 5 sont préchauffés dans les zones 11a et 11b avant d'être en contact avec les fils de carbones 3 et contre-collés de part et d'autre de deux barres chauffées 12a et 12b dont l'entrefer est contrôlé. Une calandre 16, qui peut être refroidie, applique ensuite une pression sur la nappe unidirectionnelle avec un voile de chaque côté, pour conduire au matériau de renfort 1 se présentant sous la forme d'un ruban. Un rouleau de renvoi 18 permet de rediriger au matériau de renfort 1vers le système de traction comprenant un trio d'appel 19 puis d'enroulage 20 piloté par un moteur pour former un rouleau constitué du matériau de renfort 1 ainsi formé.

Il est à noter que sur cette ligne de production, les tapis ne sont pas motorisés mais tractés par les fils de renfort eux-mêmes.

Par ailleurs, comme expliqué dans la demande WO 2010/061114 et présenté sur sa Figure 8, plusieurs matériaux de renfort selon l'invention, se présentant sous la forme de rubans ont été fabriqués simultanément. Chaque fil de carbone torsadé constitutif de la nappe unidirectionnelle à former a été tiré d'un rouleau du fil torsadé sélectionné préalablement fabriqué. Des nappes unidirectionnelles de la largeur souhaitée ont été réalisées, en parallèle, avec le nombre de fils choisis, et ont été positionnées de manière espacée, en laissant un espace suffisant entre chaque nappe unidirectionnelle. Un non-tissé unique (correspondant aux voiles 4 et 5) couvrant les différentes nappes unidirectionnelles 2 et les espaces a, donc, été associé à l'ensemble des nappes unidirectionnelles 2 sur chacune de leur face. Une découpe des non-tissés, une fois ces derniers contre-collés aux nappes, a, ensuite, été opérée grâce à des couteaux chauffants, et ce entre chaque nappe unidirectionnelle formée, conduisant ainsi à différents matériaux de renfort selon l'invention, dont la production a été réalisée côte à côte. L'espace visé entre chaque nappe unidirectionnelle était de l'ordre de 0,5 à 2 mm, de manière à pouvoir réaliser la découpe, entre chaque nappe unidirectionnelle le long de leurs bords, et conduire à différents matériaux de renfort, produits en continu et en parallèle.

1) Epaisseur sous vide :

Lors d'une dépose automatisée de forme complexe ou de préforme épaisse, il est important d'avoir un matériau qui foisonne le moins possible, et donc d'avoir une épaisseur de matériau déposée proche de l'épaisseur finale de la pièce composite. En effet, si le matériau présente un foisonnement important, donc une épaisseur bien supérieure à l'épaisseur finale après fabrication du laminé, il y aura alors présence de défauts importants sur la pièce. Les défauts seront majoritairement dus à des sur-longeurs et engendreront des plissures. Ceci n'est pas acceptable pour l'homme de métier. Afin de caractériser cette propriété, il est mesuré l'épaisseur d'une préforme après dépose automatisée avant et après mise sous vide.

Comme illustré à la figure 12, des préformes P de 200x200mm sont constituées suivant un empilement quasi isotrope symétrique, plus précisément selon le drapage [+45/0/-45/90]3s. La préforme P est disposée sur une plaque. Un robot FANUC et un palpeur type LVDT de la marque HEIDENHAIN / ST3077 sont utilisés pour effectuer la mesure d'épaisseur. La pointe du palpeur est une touche circulaire de 50mm de diamètre. Le palpeur vient mesurer l'épaisseur de la préforme sur 5 points P1 à P5, ce qui permet ensuite d'obtenir une valeur d'épaisseur moyenne de la préforme. Une mesure est réalisée tous les 50mm en x et 50mm en y.

Par la suite, la préforme est mise sous vide (pression résiduelle inférieure à 15mbar) à l'aide d'une bâche à vide et d'une pompe. L'épaisseur de l'ensemble est alors mesurée, l'épaisseur des consommables est déduite pour obtenir l'épaisseur de la préforme sous vide.

Il est ensuite calculé le ratio de l'épaisseur sans vide par l'épaisseur sous vide. Plus ce ratio est important, plus l'épaisseur sans vide est grande par rapport à l'épaisseur sous vide et plus apparaît le risque d'avoir des défauts sur la pièce finale. Le but est donc de minimiser ce ratio.

Le tableau 4 ci-dessous récapitule pour les matériaux 2 à 12, le ratio de l'épaisseur (épaisseur sans vide) divisée par l'épaisseur théorique (épaisseur sous vide).

Tableau 4

| Matériau | Matériau Comparatif 2 | Matériau Comparatif 3 | Matériaux selon l'invention | | | | | | |
|---|---|---|---|---|---|---|---|---|---|
| | | | 4 | 5 | 8 | 9 | 10 | 11 | 12 |
| Ratio de l'épaisseur divisé par l'épaisseur théorique à 60% TVF | 1.58 | 1.49 | 1.18 | 1.32 | 1.26 | 1.26 | 1.28 | 1.32 | 1.23 |

Par rapport aux matériaux 2 et 3 de l'art antérieur, les matériaux 4 à 12 conformes à l'invention permettent de minimiser le ratio de l'épaisseur sans vide par l'épaisseur sous vide. L'objet de l'invention permet ainsi de diminuer le foisonnement.

2) Influence du retordage sur la qualité de la dépose automatisée.

Il est primordial que l'étape de dépose automatisée de la préforme n'engendre pas de défauts dans cette dernière. L'architecture du fil de renfort peut influencer la qualité de la dépose. Ainsi, il est nécessaire d'évaluer si le retordage des fils de renfort a un impact sur la qualité de la préforme après dépose.

Plus précisément, le retordage des fils de renfort peut avoir une influence sur le phénomène dit « de cisaillement ». Lors de la dépose superposée de matériaux de renfort (nappe unidirectionnelle 2 et voiles 4, 5), le fil de renfort d'un pli situé juste en dessous d'un pli suivant, se retrouve soumis à du cisaillement, dû à la pression et au mouvement de la tête du robot au moment de la dépose. Ce cisaillement est surtout présent dans la zone de début de dépose. Au fur et à mesure que plusieurs plis sont déposés, ce cisaillement intra pli peut s'intensifier, ce qui résulte en une augmentation locale de l'épaisseur de la préforme et l'apparition de défauts (tels que plissures, effilochages, décollement de plis, ...) ce qui engendre une mauvaise qualité de préforme.

Un essai de dépose automatisée type industrielle de plis avec fils de renfort torsadés a été réalisé. Le robot Coriolis C1 équipé d'une tête AFP Coriolis 16 nappes¼" et d'un moyen de chauffe type laser 12kw a été utilisé pour réaliser la dépose. Dans ce cas précis, seules 8 nappes sur 16 sont déposées en même temps, côte à côte. La loi de chauffe suivie est décrite dans le tableau 5 ci-dessous.

Tableau 5

| | V min (m/s) | V max (m/s) | P min (W) | P max (W) |
|---|---|---|---|---|
| Loi de chauffe 1er pli | 0,01 | 0,6 | 250 | 800 |
| Loi de chauffe X plis (X>1) | 0,01 | 0.6 | 180 | 680 |

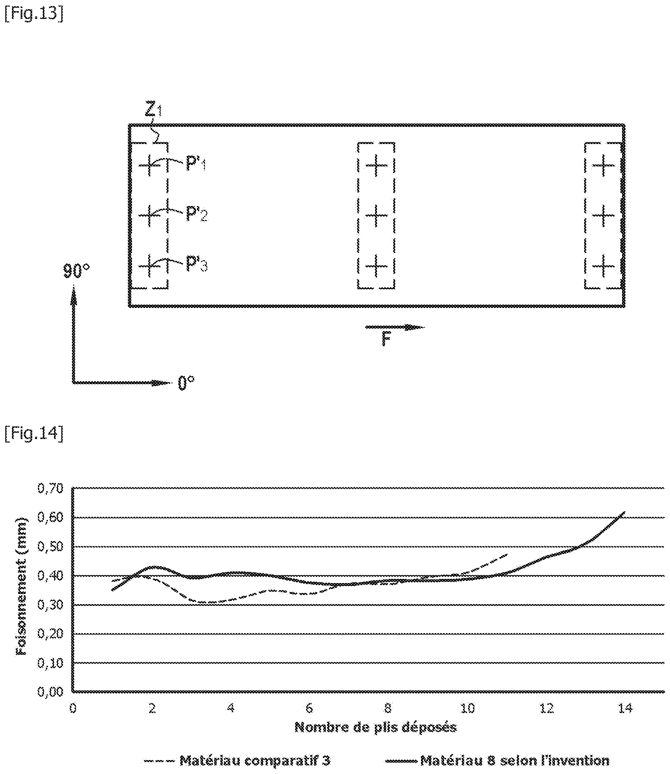

Des plis de fils de renfort torsadés sont drapés successivement à 0° sur une table aspirante pour former une préforme de 500mm (dans le sens 0°) par 150mm. Le début de dépose du fil de renfort qui se fait selon le sens de dépose représenté par la flèche F, se situe toujours au même endroit sur la préforme (zone rectangulaire Z1 sur la figure 13). Ainsi, l'épaisseur étudiée se situe dans cette zone Z1.

Après le drapage de chaque pli, des mesures d'épaisseurs en zone de début de dépose (points P'1, P'2, P'3 à l'intérieur de la zone Z1) de la préforme sont réalisées à l'aide d'un trusquin, d'un support fait à partir de barres en aluminium et d'un poids de 1kg, représentant une pression de 0,02 bar appliquée sur la préforme au moment de la mesure d'épaisseur. Lors de la mesure, le moyen de mesure d'épaisseur est toujours positionné au même endroit. A chaque dépose de pli, il est enlevé pour permettre le passage du robot puis repositionné après dépose. Le drapage s'arrête lorsque la qualité de la préforme est jugée insatisfaisante.

Les matériaux conformes à l'invention 4 et 8 (tableau 3) sont respectivement comparés aux matériaux comparatifs 2 et 3.

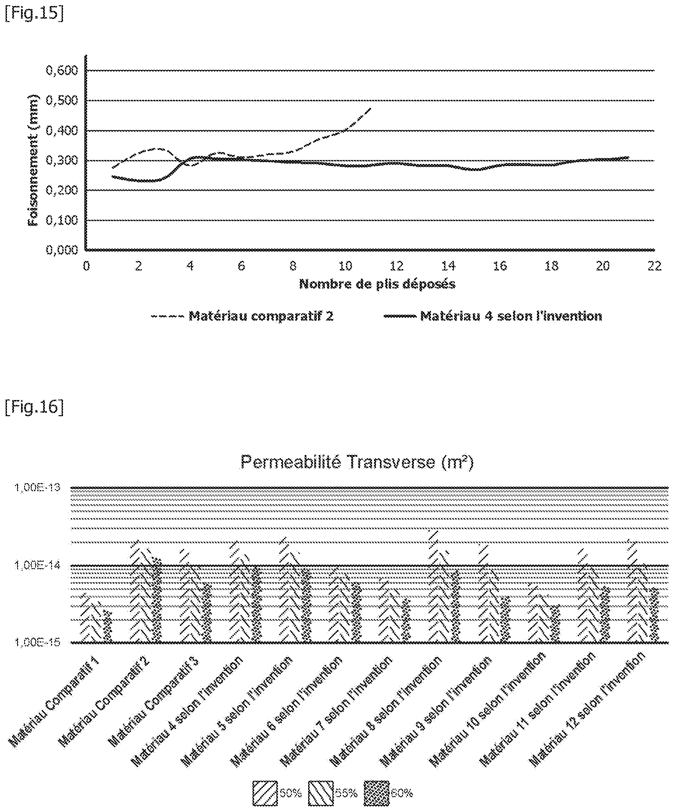

Les figures 14 et 15 montrent l'évolution du foisonnement en fonction du nombre de plis déposés pour le matériau comparatif 3 et le matériau 8 selon l'invention (figure 14) et pour le matériau comparatif 2 et le matériau 4 selon l'invention (figure 15).

Pour rappel, le foisonnement est défini comme le rapport de l'épaisseur totale de la préforme avec X plis déposés sur le nombre de plis déposés X. Soit :

Foisonnement (en mm) = épaisseur totale de la préforme (en mm) / nombre de plis déposés.

Cela donne donc une indication sur l'épaisseur moyenne d'un pli et permet donc de quantifier le phénomène de foisonnement. Pour maximiser le phénomène de foisonnement, il est réalisé un empilement de matériaux de renfort dont les nappes unidirectionnelles s'étendent à 0°.

Tel que cela ressort des figures 14 et 15, l'évolution de l'épaisseur par pli en fonction du nombre de plis déposés est plus faible avec des fils de renfort torsadés (matériau 8 ou 4 selon l'invention respectivement) qu'avec le processus de micro-perforation (matériau comparatif 3 ou 2 respectivement). D'après les résultats, avec des fils de renfort torsadés, on constate une réduction du foisonnement et une meilleure qualité de la préforme après dépose par rapport à un matériau équivalent ayant des fils de renfort non torsadés et micro-perforé suivant l'art antérieur.

3) Influence du retordage sur la perméabilité transverse du matériau de renfort :

Il est important de valider que la présente invention maintient le même niveau de perméabilité transverse du matériau de renfort que celle obtenue avec le matériau de renfort micro-perforé suivant l'art antérieur. Celle-ci peut se définir par l'aptitude qu'a un fluide à traverser un matériau fibreux. Elle se mesure en m2. Les valeurs données ci-dessous dans le tableau 6 sont mesurées avec l'appareillage et la technique de mesure décrite dans la Thèse intitulée « Problématique de la mesure de la perméabilité transverse de préformes fibreuses pour la fabrication de structures composites », par Romain Nunez, soutenue à l'Ecole Nationale Supérieure des Mines de Saint Etienne, le 16 Octobre 2009, à laquelle on pourra se référer pour plus de détails.

La mesure est notamment réalisée avec un contrôle de l'épaisseur de l'échantillon pendant l'essai en utilisant deux chambres co-cylindriques permettant de réduire l'influence du « race-tracking » (passage du fluide à côté ou « sur le côté » du matériau dont la perméabilité est à mesurer). Le fluide utilisé est de l'eau et la pression est de 1 bar +/- 0,01bar. Des préformes de diamètre 270mm sont constituées suivant un empilement quasi isotrope symétrique, [+45/0/135/90]s, 8 plis.

Le tableau 6 ci-dessous propose les valeurs de perméabilité transverse mesurée pour des taux volumiques de fibres (TVF) de 50%, 55% et 60% sur les matériaux comparatifs 1, 2 et 3 ainsi que sur les matériaux 4 à 12 selon l'invention (cf tableau 3). Les valeurs de perméabilité transverse du tableau 6 trouvées pour les trois échantillons avec des taux volumiques de fibres différents pour chaque matériau sont synthétisées à la figure 16.

Tableau 6

| Matériau | | Matériau Comparatif 1 | Matériau Comparatif 2 | matériau comparatif 3 | Matériau 4 selon l'invention | Matériau 5 selon l'invention | Matériau 6 selon l'invention |
|---|---|---|---|---|---|---|---|
| Perméabilité Transverse (m2) | 50% | 4,45E-15 | 2,11E-14 | 1,61E-14 | 2,05E-14 | 2,27E-14 | 1,01E-14 |
| | 55% | 3,40E-15 | 1,63E-14 | 9,79E-15 | 1,39E-14 | 1.45E-14 | 7,81E-15 |
| | 60% | 2,60E-15 | 1,26E-14 | 5,97E-15 | 6,49E-15 | 9,28E-15 | 6,04E-15 |
| Matériau | | Matériau 7 selon l'invention | Matériau 8 selon l'invention | Matériau 9 selon l'invention | Matériau 10 selon l'invention | Matériau 11 selon l'invention | Matériau 12 selon l'invention |
| Perméabilité Transverse (m2) | 50% | 6,72E-15 | 2,83E-14 | 1,88E-14 | 5,79E-15 | 1,64E-14 | 2,17E-14 |
| | 55% | 4,98E-15 | 1.55E-14 | 8,66E-15 | 4,21E-15 | 9,39E-15 | 1.05E-14 |
| | 60% | 3,69E-15 | 8,55E-15 | 3,98E-15 | 3,06E-15 | 5,37E-15 | 5,10 E-15 |

Avec l'ensemble des fils de renfort torsadés à 8 ou 10 tours par mètre, la perméabilité transverse du matériau selon l'invention (matériau 4 et 5) est équivalente à celle d'un matériau comparatif micro perforé (matériau comparatif 2) pour les trois taux volumiques étudiés. Le choix de la torsion est dépendant du titre et du nombre de filaments des fils. Une torsion différente pourrait conduire à des résultats similaires pour des fils de titres et nombre de filaments différents.

Pour un grammage de fibres de carbone de 280 g/m$^2$, le retordage de fils de renfort à 10 tours par mètre semble donner une meilleure perméabilité transverse moyenne que pour un matériau qui est micro-perforé suivant l'art antérieur.

Dès que le nombre de tours par mètre diminue (matériau 6 par rapport aux matériaux 4 et 5 et matériau 9 par rapport au matériau 8), la perméabilité transverse du matériau est plus faible. En revanche, elle reste supérieure à celle d'un matériau comparatif non micro perforé (matériau comparatif 1).

Dès que le nombre de fils de renfort torsadés diminue, même avec un nombre de tours par mètre plus élevé (matériau 7), la perméabilité transverse est plus faible (par rapport au matériau 4). Pour que le retordage des fils de renfort entraine une amélioration de la perméabilité transverse, il est plus efficace que l'ensemble des fils de renfort soient torsadés plutôt que de chercher à augmenter le nombre de tours par mètre sur un seul fil de renfort torsadé.

4) Influence du retordage des fils de renfort sur les propriétés mécaniques du composite :

Des préformes de 430 mm x 430 mm constituées de la séquence d'empilement adaptée au grammage de carbone sont placées dans un moule d'injection sous presse. Un cadre d'épaisseur connu entourant la préforme permet d'obtenir le taux volumique de fibres TVF souhaité. La résine époxy commercialisée par HEXCEL Corporation, Stamford, CT USA sous la référence HexFlow RTM6 est injectée à 80°C sous 2 bars à travers la préforme qui est maintenue à 120°C au sein de la presse. La pression appliquée par la presse est de 5,5 bars. Lorsque la préforme est remplie et que la résine sort du moule, le tuyau de sortie est fermé et le cycle de polymérisation commence (3°C/min jusqu'à 180°C suivi d'une post-cuisson de 2h à 180°C et d'un refroidissement à 5°C/min).

Des éprouvettes sont ensuite découpées aux dimensions adaptées pour réaliser des tests de compression sur plaque trouée (OHC) et sur plaques pleines (UNC) résumés dans le tableau 7 ci-dessous.

Tableau 7

| | UNC | OHC |
|---|---|---|
| **Orientation des plis de la préforme** | [45/0/135/90]3s (si grammage à 210g/m2)<br><br>[45/0/135/90]2s (si grammage à 280q/m2 ou 350g/m2) | [45/0/135/90]3s (si grammage à 210g/m2)<br><br>[45/0/135/90]2s (si grammage à 280g/m2 ou 350g/m2) |
| **Machine de test** | Zwick Z300 | Zwick Z300 |
| **Norme EN** | 6036 | 6036 |

Les tests sont effectués avec les huit matériaux de renfort 4 à 11 selon l'invention et les matériaux comparatifs 2 et 3 (tableau 3). Les résultats des tests de compression sur plaque trouée (OHC) sont repris dans le tableau 8 ci-dessous.

Tableau 8

| OHC (sec, 23°C) | Matériau 2 comparatif | Matériau 3 comparatif | Matériau 4 selon l'invention | Matériau 5 selon l'invention | Matériau 6 selon l'invention |
|---|---|---|---|---|---|
| Contrainte (MPa) | 286 | 276 | 289,2 | 286 | 284,4 |
| **OHC (sec, 23°C)** | **Matériau 7 selon l'invention** | **Matériau 8 selon l'invention** | **Matériau 9 selon l'invention** | **Matériau 10 selon l'invention** | **Matériau 11 selon l'invention** |
| Contrainte (MPa) | 271,0 | 281,5 | 283,1 | 268,7 | 251 |

Il est connu de l'art antérieur que le grammage de carbone peut influer sur les résultats mécaniques. De façon générale, plus le grammage de carbone est élevé, plus les propriétés mécaniques de compression ont tendance à baisser. Dans la présente demande, les résultats sont comparés à iso grammage de carbone.

Pour un grammage de 210g/m$^2$, il n'y a pas de différence pour des tests de compression sur plaque trouée (OHC), entre le matériau comparatif et les matériaux selon l'invention. Les mêmes conclusions peuvent être tirées pour les grammages de 280 g/m². Concernant les grammages de 350g/m², il n'est pas possible de faire des comparaisons avec un matériau micro-perforé, celui-ci étant irréalisable.

Les résultats des tests de compression sur plaques pleines (UNC) sont repris dans le tableau 9 ci-dessous.

Tableau 9

| UnC (sec, 23°C) | **Matériau Comparatif 2** | **Matériau comparatif 3** | **Matériau 4 selon l'invention** | **Matériau 5 selon l'invention** | **Matériau 6 selon l'invention** |
|---|---|---|---|---|---|
| Contrainte (MPa) | 544,0 | 487,1 | 558,5 | **558** | **557,9** |
| UnC (sec, 23°C) | **Matériau 7 selon l'invention** | **Matériau 8 selon l'invention** | **Matériau 9 selon l'invention** | **Matériau 10 selon l'invention** | **Matériau 11 selon l'invention** |
| Contrainte (MPa) | 565,4 | 516,7 | 531,4 | 485.5 | 444 |

Les résultats du tableau 9 permettent de tirer les mêmes conclusions que pour les essais sur plaque trouée.

5) Influence du retordage des fils de renfort sur la conductivité électrique transverse :

Des préformes de 335mm x 335mm sont constituées de plis de renfort dont le nombre dépend du grammage des fils de renfort carbone. La séquence d'empilement est [0/90]ns, avec ns un nombre entier dépendant du grammage des fils de renfort carbone afin d'avoir un panneau d'épaisseur finale de 3mm et 60% de taux volumique de fibres. Les préformes sont ensuite placées dans un moule d'injection sous presse. A l'identique que pour les essais mécaniques de compression (voir paragraphe 4 ci-dessus), des panneaux composites matériau de renfort / RTM6 sont constitués via le procédé d'injection (mêmes paramètres que pour les plaques de compression).

Avec une découpe jet d'eau, 24 éprouvettes, de 40mm x 40mm réparties uniformément dans le panneau sont prédécoupées dans le panneau. Les deux surfaces du panneau pré découpé sont ensuite sablées afin d'exposer les fibres de carbone. Ensuite, les faces recto/verso du panneau sont traitées afin de déposer une couche de métal conducteur, typiquement de l'étain et du zinc via un procédé d'arc électrique. Les dépôts de métal doivent être retirés des champs des éprouvettes par sablage ou par ponçage. Ce dépôt de métal conducteur permet d'avoir une faible résistance de contact entre l'échantillon et le moyen de mesure. Les éprouvettes individuelles sont ensuite découpées du panneau.

Une source de puissance (bloc d'alimentation TTi EL302P programmable 30V/2A, Thurlby Thandar Instruments, Cambridge UK) capable de faire varier le courant et la tension est utilisée pour déterminer la résistance. L'échantillon est en contact avec les deux électrodes du bloc d'alimentation ; ces électrodes sont mises en contact à l'aide d'une pince. Il faut s'assurer que les électrodes ne sont pas en contact les unes avec les autres ou en contact avec tout autre élément métallique. Un courant de 1 A est appliqué et la résistance est mesurée par deux autres électrodes reliées à un voltmètre/ohmmètre. L'essai est effectué sur chaque échantillon à mesurer. La valeur de la résistance est ensuite ramenée à la valeur de la conductivité à l'aide des dimensions de l'échantillon et des formules suivantes :

$$\text{Résistivité (Ohm.m)} = \text{Résistance (Ohm)} \times \text{Surface (m}^2) / \text{Epaisseur (m)}$$

$$\text{Conductivité (S/m)} = 1/ \text{Résistivité}$$

Les tests de conductivité électrique transverse sont effectués avec le matériau comparatif 2 et les matériaux 4 et 5 selon l'invention (tableau 3). Les résultats des tests sont repris dans le tableau 10 ci-dessous.

Tableau 10

|  | **Matériau Comparatif 2** | **Matériau 4 selon l'invention** | **Materiau 5 selon l'invention** |
|---|---|---|---|
| Conductivité Electrique Transverse (S/m) | 7.5 | 23,6 | 34 |

Le matériau comparatif 2 et les matériaux 4 et 5 selon l'invention ont le même grammage de fibres. La conductivité électrique transverse moyenne du matériau 4 selon invention est supérieure au matériau comparatif 2, micro-perforé suivant l'art antérieur. La torsion des fils de renfort améliore la conductivité électrique transverse du matériau de renfort.

## PARTIE B

Une deuxième série d'essais a été réalisée conformément aux données présentées dans le tableau 11 ci-après. Les matériaux obtenus ne sont pas micro-perforés à l'exception du matériau comparatif 27.
Tableau 11

| Matériau | | Matériau 19 | Matériau 20 | Matériau 21 invention | Matériau 22 invention | Matéria u 23 |
|---|---|---|---|---|---|---|
| Fibres de renfort | | Hexcel IM7 12 K | | | Hexcel IMA 12 K | |
| Liant polymérique | | 1R8 4 g/m2 par face | | | | |
| Largeur de la nappe | | 6,35 mm | | | 12,7 mm | |
| Nombre de fils de carbone | | 4 | | | 6 | |
| Masse surfacique des fibres de renfort de l'UD (g/m2) | | 280 | | | 210 | |
| Micro-perforation | | Non | Non | Non | Non | Non |
| retordage | Nombre de tours par mètre | 10 | | | 8 | |
| | Nombre de fils retordus | tous | | | tous | |
| | Sens de retordage | Tous S | SZZS | SZSZ | Tous S | SZSZSZ |

| Matériau | Matériau 24 invention | Matériau 25 invention | Matériau 26 | Matériau comparatif 27 |
|---|---|---|---|---|
| Fibres de renfort | Hexcel IMA 12 K | Hexcel IMA 12 K | Hexcel IMA 12 K | |
| Liant polymérique | 1R8 4 g/m2 par face | | | |
| Largeur de la nappe | 12,7 mm | 38,1 mm | 12,7 mm | |
| Nombre de fils de carbone | 6 | 18 | 6 | |
| Masse surfacique des fibres de renfort de l'UD g/m2) | 210 | 210 | 210 | |
| Micro-perforation | Non | Non | Non | Oui |

(suite)

| Matériau | | Matériau 19 | Matériau 20 | Matériau 21 invention | Matériau 22 invention | Matéria u 23 |
|---|---|---|---|---|---|---|
| retordage | Nombre de tours par mètre | 8 | | 8 | NA | |
| | Nombre de fils retordus | tous | | tous | NA | |
| | Sens de retordage | Tous Z | SSZZSS | 7 fils S, 5 fils Z et 6 fils S | NA | |

## Fabrication des matériaux de renfort selon l'invention

Ces essais ont été réalisés sur une nouvelle ligne de production répondant aux exigences de production à l'échelle industrielle, qui impose des cadences de production plus élevées, dans le but de diminuer les arrêts de la ligne de production et l'usure des éléments constitutifs de cette dernière, ainsi que sa sécurité. De telles augmentations de cadence augmentent l'inertie globale de la ligne, engendrent un plus grand nombre de frottements des matériaux sur les différents points / rouleaux de la ligne, et donc notamment sur la force nécessaire pour entraîner les tapis. En conséquence, la ligne de production précédemment décrite en lien avec la figure 19, a été modifiée par l'introduction d'une motorisation des tapis continus 15a et 15b. Les tapis 15a et 15b ont été motorisés indépendamment l'un de l'autre par l'intermédiaire des rouleaux 14a et 14c, les rouleaux 14b et 14d restant libres en rotation.

Cette augmentation des cadences de production a mis en évidence les difficultés pour produire les nappes unidirectionnelles avec une présence minimisée de défauts de type espacement entre fils, chevauchement ou ondulation, avec l'utilisation de fils de renfort tous torsadés selon un même type de torsion S ou Z. En effet, malgré l'utilisation de peigne ou de rouleau de guidage, la trajectoire des fils de renfort n'est pas totalement maîtrisée, ce qui a conduit à l'apparition de défauts. Ces risques peuvent être minimisés et même évités, en utilisant des nappes unidirectionnelles mixtes S/Z, comme proposées dans le cadre de l'invention.

Plusieurs matériaux 19 ont été fabriqués en parallèle, sur cette ligne de production d'échelle industrielle et présentant donc des cadences de production plus élevées.

Comme dans la première série d'essais, plusieurs matériaux de renfort selon l'invention, se présentant sous la forme de rubans ont été fabriqués simultanément.

De même, plusieurs matériaux 20 et plusieurs matériaux 21 ont été fabriqués en parallèle. Il a été constaté que les matériaux 20 et 21 obtenus, par comparaison aux matériaux 19, étaient plus réguliers, notamment au niveau des bords. En effet, l'alignement des fils lors de la constitution des nappes unidirectionnelles étaient de meilleure qualité, dans le cas des matériaux 20 et 21. De ce fait, la distance entre deux nappes unidirectionnelles fabriquées côte à côte était plus régulière, facilitant, entre deux nappes unidirectionnelles formées, la découpe des deux voiles contre-collés sur les deux faces de ces dernières.

La même constatation a été observée, dans le cas des matériaux 22 et 23, et 24 et 25. Dans le cas du matériau 22 ne comprenant que des fils de type S, plus de défauts de type plissures, gaps ou chevauchements entre fils, irrégularités au niveau des bords, ont été observés que dans le cas du matériau 23, utilisant un enchaînement de fils SZSZSZ. De même, dans le cas du matériau 24 ne comprenant que des fils de type Z, plus de défauts de type plissures, gaps ou chevauchements entre fils, irrégularités au niveau des bords, ont été observés que dans le cas du matériau 25, utilisant un enchaînement de fils SSZZSS.

Par ailleurs, dans le cas du matériau 26 comprenant 18 fils, selon l'enchainement 7 fils S, 5 fils Z, puis 6 fils S, la constitution d'une nappe unidirectionnelle par le procédé précédemment décrit a conduit à la nappe unidirectionnelle telle que présentée figure 18. Comme cela est visible sur cette figure, il existe un espace marqué à la jonction 7 fils S / 5 fils Z, ce qui constitue un défaut de qualité avec la création d'un gap continu de plus de 1mm de large sur toute la longueur de la nappe. Le groupe de fils Z est attiré vers la droite, alors que les groupes de fils S sont attirés vers la gauche. Ceci entraine la création d'un gap continu non satisfaisant. Cet enchaînement, ne correspond pas aux définitions P1, P2, I1 et I2, de nappes unidirectionnelles mixtes S/Z, données dans le cadre de l'invention, qui conduisent à des nappes unidirectionnelles plus équilibrées en nombre de fils S et Z et dont la couverture, du fait d'une réduction des risques d'espaces inter-fils, est plus importante.

Ainsi, dans le cadre de l'invention, il a été constaté des phénomènes de déviation de la trajectoire des fils de renfort lors de la constitution de nappes unidirectionnelles avec des fils de renfort torsadés selon une même torsion ou selon des configurations ne correspondant pas aux définitions P1, P2, I1 et I2, de nappes unidirectionnelles mixtes S/Z, données dans le cadre de l'invention, et ce malgré l'utilisation de dispositif de guidage ou de peigne. Ces phénomènes ne se produisent pas pour des nappes unidirectionnelles ne comportant que 3 fils ou moins. Pour les nappes unidirectionnelles constituées de plus de 3 fils, l'utilisation de nappes unidirectionnelles mixtes S/Z proposées dans le cadre de l'invention, permet de résoudre le problème.

Par ailleurs, les phénomènes de déviation sont exacerbés, lorsque la largeur des matériaux de renfort produits augmente. Le problème est encore plus marqué pour les largeurs produites supérieures à 7, voire 12 mm. Les risques de déviation des fils de renfort, solutionnés avec les nappes unidirectionnelles mixtes S/Z proposées dans le cadre de l'invention, se posent quel que soit le procédé de fabrication mis en oeuvre, c'est à dire que plusieurs matériaux de renfort soient fabriqués en parallèle ou non. En effet, les phénomènes de déviation s'ils se produisent soulèvent également des difficultés, lors de la dépose des matériaux selon l'invention, conduisant à un positionnement non satisfaisant.

**Dépose automatisée des matériaux de renfort selon l'invention**

Les matériaux 19 à 25 ont été déposés grâce à un dispositif de dépose automatisé, comprenant un guide constitué d'une gorge de guidage dans laquelle le matériau circule, avant d'être déposé sur la surface de dépose. Ce guide permet de s'assurer du bon positionnement de la nappe en sortie de la tête de dépose du dispositif ce qui permettra par la suite à la tête de dépose de bien contrôler la trajectoire du matériau de renfort et son positionnement sur la surface de dépose, comme cela ressort des photographies prises présentées en partie gauche de la figure 17. Comme illustré sur la figure 17, pour l'évaluation des matériaux, une dépose a été réalisée sur une surface plane, en déposant les unes à côté des autres, dans le but d'obtenir une dépose jointive, une série de bandes parallèles de matériau 19 (SSSS). Il a été procédé, de même, avec le matériau 20 (SZZS) et le matériau 21 (SZSZ). Avec ces deux derniers matériaux, la dépose est mieux maîtrisée, ce qui conduit à une réduction des gaps et des ondulations sur la surface de dépose. En observant le comportement des matériaux au sein de la gorge de guidage, il a été constaté qu'un mauvais centrage du matériau 19 (SSSS) se produisait, celui-ci venant en butée sur l'un des bords de la gorge, alors que les matériaux 20 et 21 étaient, quant à eux, très bien centrés dans la gorge et en appui sur ses deux bords.

Les mêmes constatations ont été observées pour les matériaux 22 et 23, d'une part, et pour les matériaux 24 et 25 d'autre part. Dans le cas du matériau 22 ne comprenant que des fils de type S, la dépose est moins bonne, par rapport à l'utilisation du matériau 23, utilisant un enchaînement de fils SZSZSZ. De même, dans le cas du matériau 24 ne comprenant que des fils de type Z, plus d'espaces (gaps), ont été observés que dans le cas du matériau 25, utilisant un enchaînement de fils SSZZSS. Le tableau 12 présente la largeur moyenne du gap obtenue entre deux bandes, mesurées au moyen d'un réglet, dans le cas des déposes des matériaux 24 et 25.

Tableau 12

| Matériau | 25 (SSZZSS) | 24 (ZZZZZZ) |
|---|---|---|
| Nombre de bandes déposées | 8 | 8 |
| Gap moyen (mm) | 0,1mm | 1,5mm |

Il est clair que l'utilisation de la nappe SSZZSS, constituée à la fois de fils torsadés de torsion S et de fils torsadés de torsion Z, conduit à une nette réduction des zones sans fils de renfort dans la nappe unidirectionnelle obtenue.

**Performances des matériaux selon l'invention**

Les performances des matériaux selon l'invention ont été évaluées, selon les méthodes décrites dans la PARTIE A.

Que la nappe unidirectionnelle soit constituée uniquement de fils torsadés de torsion S ou Z, ou que la nappe unidirectionnelle soit constituée à la fois de fils torsadés de torsion S et de fils torsadés de torsion Z, les avantages de l'utilisation des fils torsadés proposée dans le cadre de l'invention, en termes de diminution du ratio épaisseur sous vide/épaisseur sans vide, diminution du foisonnement, amélioration de la perméabilité transverse du matériau, amélioration de la conductivité électrique transverse du matériau, sont conservés.

Les performances mécaniques sont, quant à elles, très satisfaisantes, du fait d'une réduction des défauts au sein des matériaux de renfort produits.

Des résultats obtenus sont présentés dans le tableau 13 ci-après :

Tableau 13

| Matériau | Matériau comparatif 27 | Matériau selon l'invention 23 |
|---|---|---|
| OHC sec, 23°C Contrainte MPa | 263 | 281 |
| Une sec, 23°C Contrainte MPa | 533 | 549 |

Les performances de foisonnement sont, quant à elles, améliorées avec la nappe unidirectionnelle constituée à la fois de fils torsadés de torsion S et de fils torsadés de torsion Z, en comparaison avec un matériau comparatif 27 micro-perforé. Ainsi, les performances de foisonnement sont améliorées que le matériau comporte une nappe unidirectionnelle constituée d'un enchaînement de fils torsadés dans un même sens, ou une nappe unidirectionnelle constituée d'un mixte de fils torsadés en S et torsadés en Z. Les résultats obtenus sont présentés dans le tableau 14 ci-après :

Tableau 14

| Matériau | Matériau comparatif 27 | Matériau selon l'invention 23 |
|---|---|---|
| Ratio de l'épaisseur divisé par l'épaisseur théorique à 60% TVF | 1,6 | 1,3 |

Les performances en perméabilité transverse ont également été mesurées sur le matériau selon l'invention 23 et comparées à celles du matériau comparatif 27, et sont présentées ci-après dans le tableau 15. Les perméabilités transverses obtenues sont comparables entre les deux matériaux.
Tableau 15

| Matériau | | Matériau comparatif 27 | Matériau selon l'invention 23 |
|---|---|---|---|
| Perméabilité (m$^2$) | 58% TVF | 5,54$^{E}$-15 | 5,01$^{E}$-15 |
| | 60% TFV | 4,97$^{E}$-15 | 4,02$^{E}$-15 |
| | 62% TVF | 4,15$^{E}$-15 | 3,21$^{E}$-15 |

Les performances de conductivité électrique transverse ont également été mesurées sur le matériau selon l'invention 23, et sont présentées dans le tableau 16 ci-après :

Tableau 16 :

| Matériau | Matériau selon l'invention 23 |
|---|---|
| Conductivité électrique transverse (S/m) | 12,3 |

Le matériau selon l'invention 23 offre de bonnes propriétés électriques, par comparaison au matériau comparatif 2.

**Revendications**

1. Matériau de renfort (1) constitué d'une nappe unidirectionnelle de renfort (2) formée de un ou plusieurs fils de renfort (3) de carbone, associée sur chacune de ses faces à une couche de fibres polymériques (4, 5) qui est un non-tissé, la part polymérique du matériau de renfort représentant de 0,5 à 10% de sa masse totale, et préférentiellement de 2 à 6% de sa masse totale, **caractérisé en ce que** ladite nappe unidirectionnelle de renfort (2) comporte un ou une série de fils de renfort (3) torsadé(s) individuellement selon une torsion de 3 à 15 tours/m, de préférence de 6 à 12 tours/m.

2. Matériau de renfort (1) selon la revendication 1, **caractérisé en ce que** ladite nappe unidirectionnelle de renfort (2) est formée de plusieurs fils de renfort (3), et au moins un fil de renfort sur cinq, de préférence au moins un fil de renfort sur deux ou trois, et préférentiellement, tous les fils de renfort, sont torsadés individuellement selon une torsion de 3 à 15 tours/m, de préférence de 6 à 12 tours/m.

3. Matériau de renfort (1) selon la revendication 1 ou 2, **caractérisé en ce que** la nappe unidirectionnelle de renfort (2) présente un grammage dans la gamme allant de 126 à 280g/m$^2$, notamment de 126 à 210 g/m$^2$.

4. Matériau de renfort (1) selon l'une des revendications 1 à 3, **caractérisé en ce que** la nappe unidirectionnelle de renfort (2) est formée de un ou plusieurs fils de renfort (3) de carbone ayant un titre de 3 à 24 K, de préférence de 6 à 12 K.

5. Matériau de renfort (1) selon l'une des revendications 1 à 4, **caractérisé en ce que** tous les fils de renfort (3) de carbone formant la nappe unidirectionnelle de renfort (2) sont torsadés individuellement selon une torsion de 3 à 15 tours/m, de préférence de 6 à 12 tours/m, la nappe unidirectionnelle de renfort (2) comportant au moins 3 fils de renfort (3) de carbone ainsi torsadés avec au moins un fil de renfort de torsion S et au moins un fil de renfort de torsion Z, et:

   - lorsque le nombre total de fils de renfort (3) de carbone torsadés formant la nappe unidirectionnelle de renfort (2) est pair, le nombre de fils de renfort (3) de carbone torsadés de torsion S d'un côté du plan Δ et le nombre de fils de renfort (3) de carbone torsadés de torsion S de l'autre côté du plan Δ, qui sont, chacun indépendamment, un entier qui appartient à la gamme {[(nombre total de fils)/4] - 35 % ; [(nombre total de fils)/4] + 35 %}, chaque borne de la gamme étant arrondie à l'entier le plus proche si la formule la définissant ne conduit pas à un entier, les autres fils de renfort (3) de carbone torsadés étant des fils de torsion Z ;
   - lorsque le nombre total de fils de renfort (3) de carbone torsadés formant la nappe unidirectionnelle de renfort (2) est impair, le nombre de fils de renfort (3) de carbone torsadés de torsion S d'un côté du plan Δ et le nombre de fils de renfort (3) de carbone torsadés de torsion S de l'autre côté du plan Δ, qui sont soit deux entiers, soit deux entiers et demi, et sont, chacun indépendamment, dans la gamme {[(nombre total de fils)/4] - 35 % ; [(nombre total de fils)/4] + 35 %}, chaque borne de la gamme étant arrondie à l'entier ou l'entier et demi le plus proche si la formule la définissant ne conduit pas à un entier ou à un entier et demi, les autres fils de renfort (3) de carbone torsadés étant des fils de torsion Z ;

   le plan Δ étant le plan parallèle à la direction générale d'extension de ladite nappe unidirectionnelle (2) et qui partage ladite nappe unidirectionnelle (2) en deux parties égales, en étant perpendiculaire à sa surface.

6. Matériau de renfort (1) selon la revendication 5, **caractérisé en ce qu'**il présente une largeur supérieure à 7 mm, de préférence, supérieure à 12 mm, et de préférence dans la gamme allant de 12 mm à 51 mm, et, de préférence, une longueur de 2 m à 5000 m, de préférence de 100 m à 2000 m.

7. Matériau de renfort (1) selon l'une des revendications 1 à 6, **caractérisé en ce que** les couches de fibres polymériques (4, 5) ont un caractère thermoplastique, et, sont notamment, constituées d'un polymère thermoplastique, d'un polymère thermoplastique partiellement réticulé, d'un mélange de tels polymères, ou d'un mélange de polymères thermoplastique et thermodurcissable.

8. Matériau de renfort (1) selon l'une des revendications 1 à 7, **caractérisé en ce que** les couches de fibres polymériques (4, 5) présentent un caractère collant à chaud et leur association à la nappe unidirectionnelle de renfort est réalisée grâce à ce caractère collant à chaud.

9. Matériau de renfort (1) selon l'une des revendications 1 à 8, **caractérisé en ce que** les couches de fibres polymériques (4, 5) sont des non-tissés identiques.

10. Matériau de renfort (1) selon l'une des revendications 1 à 9, **caractérisé en ce que** lesdits non-tissés ont une masse surfacique comprise dans la gamme allant de 0,2 à 20 g/m$^2$ et/ou une épaisseur de 0,5 à 50 microns, de préférence de 3 à 35 microns.

11. Matériau de renfort (1) selon l'une des revendications 1 à 10, **caractérisé en ce qu'**il est ni perforé, ni cousu, ni tricoté, ni tissé.

12. Procédé de préparation d'un matériau de renfort (1) selon l'une des revendications 1 à 11, **caractérisé en ce qu'**il comprend les étapes successives suivantes :

   a1) disposer d'une nappe unidirectionnelle de renfort (2) formée de un ou plusieurs fils de renfort (3) torsadé(s) individuellement selon une torsion de 3 à 15 tours/m,

a2) disposer d'au moins deux couches de fibres polymériques (4, 5) qui sont des non-tissés,
a3) procéder à l'association de chacune des couches de fibres polymériques à chacune des faces de la nappe unidirectionnelle de renfort.

**13.** Procédé selon la revendication 12, **caractérisé en ce qu'**il comprend, en amont de l'étape a1), une étape de réalisation de la nappe unidirectionnelle de renfort (2) comprenant l'application d'une torsion de 3 à 15 tours/m à un fil ou à une série de fils de renfort, ladite torsion étant appliquée à chaque fil de manière individuelle.

**14.** Procédé selon la revendication 12 ou 13, **caractérisé en ce que** la nappe unidirectionnelle de renfort (2) est formée de plusieurs fils de renfort (3) et **en ce que** le procédé comprend, en amont de l'étape a1) :

i) l'application d'une torsion de 3 à 15 tours/m à une série de fils de renfort, ladite torsion étant appliquée à chaque fil de manière individuelle,
ii) l'alignement des fils torsadés ainsi obtenus, éventuellement avec d'autres fils de renfort, et disposition côte à côte desdits fils, de manière à former une nappe unidirectionnelle de renfort, en particulier telle que définie à la revendication 5.

**15.** Procédé selon l'une des revendications 12 à 14, **caractérisé en ce que** les couches de fibres polymériques (4, 5), qui sont des non-tissés, ont un caractère collant à chaud et l'association de l'étape a3) est obtenue par application de chacune des couches de fibres polymériques sur chacune des faces de la nappe unidirectionnelle de renfort, ladite application étant accompagnée ou suivie d'un chauffage des fibres polymériques, entraînant leur ramollissement ou leur fusion, lui-même suivi d'un refroidissement.

**16.** Préforme constituée, au moins en partie, d'un ou plusieurs matériaux selon l'une des revendications 1 à 11.

**17.** Procédé de fabrication d'une pièce composite à partir d'au moins un matériau de renfort (1) selon l'une quelconque des revendications 1 à 11, **caractérisé en ce qu'**une résine thermodurcissable, thermoplastique ou un mélange de résines thermodurcissable et thermoplastique est injecté(e) ou infusé(e) au sein dudit matériau de renfort, d'un empilement de plusieurs matériaux de renfort selon l'une quelconque des revendications 1 à 11, ou d'une préforme selon la revendication 16.

**18.** Procédé de fabrication d'une pièce composite selon la revendication 17 **caractérisé en ce qu'**il comprend, préalablement à l'infusion ou à l'injection de la résine, une étape de constitution d'un pli ou d'un empilement comprenant plusieurs matériaux de renfort (1) selon l'une quelconque des revendications 1 à 11, lors de laquelle ledit matériau de renfort (1) est acheminé et circule, en continu, au sein d'un organe de guidage, pour assurer son positionnement, lors de sa dépose conduisant au pli ou empilement souhaité.

**19.** Procédé de fabrication selon la revendication 17 ou 18, **caractérisé en ce qu'**il comprend, préalablement à l'infusion ou à l'injection de la résine, un dépôt ou une mise en forme, qui de préférence utilise le caractère collant à chaud des non-tissés (4, 5) présents dans le(s) matériau(x) de renfort (1).

**20.** Utilisation d'un ou plusieurs matériau(x) de renfort (1) selon l'une quelconque des revendications 1 à 11, pour la réalisation d'une préforme, ou d'une pièce composite en association avec une résine thermodurcissable, thermoplastique ou un mélange de résines thermodurcissable et thermoplastique.

**21.** Procédé de fabrication selon l'une des revendications 17 à 19, ou utilisation selon la revendication 20, **caractérisé en ce qu'**une résine thermodurcissable, et en particulier une résine époxy, est injectée ou infusée.

**Patentansprüche**

**1.** Verstärkungsmaterial (1), bestehend aus einer unidirektionalen Verstärkungslage (2), die aus einem oder mehreren Verstärkungsdrähten (3) aus Kohlenstoff besteht und auf jeder ihrer Flächen mit einer Schicht aus Polymerfasern (4, 5) verbunden ist, die ein Vliesstoff ist, wobei der Polymeranteil des Verstärkungsmaterials 0,5 bis 10 % seiner Gesamtmasse und vorzugsweise 2 bis 6 % seiner Gesamtmasse ausmacht, **dadurch gekennzeichnet, dass** die unidirektionale Verstärkungslage (2) einen oder eine Reihe an einzeln verdrillten Verstärkungsdrähten (3) mit einer Drehung von 3 bis 15 Umdrehungen/m, vorzugsweise 6 bis 12 Umdrehungen/m beinhaltet.

**2.** Verstärkungsmaterial (1) nach Anspruch 1, **dadurch gekennzeichnet, dass** die unidirektionale Verstärkungslage (2) aus mehreren Verstärkungsdrähten (3) gebildet ist und mindestens einer von fünf Verstärkungsdrähten, vorzugsweise mindestens einer von zwei oder drei Verstärkungsdrähten und vorzugsweise alle Verstärkungsdrähte einzeln mit einer Drehung von 3 bis 15 Umdrehungen/m, vorzugsweise 6 bis 12 Umdrehungen/m verdrillt sind.

**3.** Verstärkungsmaterial (1) nach Anspruch 1 oder 2, **dadurch gekennzeichnet, dass** die unidirektionale Verstärkungslage (2) ein Gewicht im Bereich von 126 bis 280 g/m$^2$, insbesondere von 126 bis 210 g/m$^2$ aufweist.

**4.** Verstärkungsmaterial (1) nach einem der Ansprüche 1 bis 3, **dadurch gekennzeichnet, dass** die unidirektionale Verstärkungslage (2) aus einem oder mehreren Verstärkungsdrähten (3) aus Kohlenstoff mit einer Dichte von 3 bis 24 K, vorzugsweise von 6 bis 12 K gebildet ist.

**5.** Verstärkungsmaterial (1) nach einem der Ansprüche 1 bis 4, **dadurch gekennzeichnet, dass** alle Verstärkungsdrähte (3) aus Kohlenstoff, welche die unidirektionale Verstärkungslage (2) bilden, einzeln mit einer Drehung von 3 bis 15 Umdrehungen/m, vorzugsweise 6 bis 12 Umdrehungen/m verdrillt sind, wobei die unidirektionale Verstärkungslage (2) mindestens 3 Verstärkungsdrähte (3) aus Kohlenstoff beinhaltet, die mit mindestens einem Verstärkungsdraht mit Drehung S und mindestens einem Verstärkungsdraht mit Drehung Z verdrillt sind, und:

- wenn die Gesamtanzahl an verdrillten Verstärkungsdrähten (3) aus Kohlenstoff, welche die unidirektionale Verstärkungslage (2) bilden, gerade ist, die Anzahl an verdrillten Verstärkungsdrähten (3) aus Kohlenstoff mit Drehung S auf einer Seite der Ebene Δ und die Anzahl an verdrillten Verstärkungsdrähten (3) aus Kohlenstoff mit Drehung S auf der anderen Seite der Ebene Δ, die jeweils unabhängig eine ganze Zahl sind, die zum Bereich {[(Gesamtanzahl an Drähten)/4] - 35 % , [(Gesamtanzahl an Drähten)/4] + 35 %} gehört, wobei jeder Anschluss des Bereichs auf die nächste ganze Zahl gerundet ist, wenn die ihn definierende Formel nicht zu einer ganzen Zahl führt, die anderen verdrillten Verstärkungsdrähte (3) aus Kohlenstoff Drähte mit Drehung Z sind,
- wenn die Gesamtanzahl an verdrillten Verstärkungsdrähten (3) aus Kohlenstoff, welche die unidirektionale Verstärkungslage (2) bilden, ungerade ist, die Anzahl an verdrillten Verstärkungsdrähten (3) aus Kohlenstoff mit Drehung S auf einer Seite der Ebene Δ und die Anzahl an verdrillten Verstärkungsdrähten (3) aus Kohlenstoff mit Drehung S auf der anderen Seite der Ebene Δ, die entweder zwei ganze Zahlen oder zweieinhalb ganze Zahlen sind, und jeweils unabhängig in dem Bereich {[(Gesamtanzahl an Drähten)/4] - 35 %, [(Gesamtanzahl an Drähten)/4] + 35 %} sind, wobei jeder Anschluss des Bereichs auf die nächste ganze Zahl oder die nächsten eineinhalb ganzen Zahlen gerundet ist, wenn die ihn definierende Formel nicht zu einer ganzen Zahl oder eineinhalb ganzen Zahlen führt, die anderen verdrillten Verstärkungsdrähte (3) aus Kohlenstoff Drähte mit Drehung Z sind,

wobei die Ebene Δ die Ebene parallel zu der allgemeinen Erstreckungsrichtung der unidirektionalen Lage (2) ist und die unidirektionale Lage (2) in zwei gleiche Teile teilt, indem sie senkrecht zu ihrer Oberfläche verläuft.

**6.** Verstärkungsmaterial (1) nach Anspruch 5, **dadurch gekennzeichnet, dass** es eine Breite von mehr als 7 mm, vorzugsweise mehr als 12 mm und vorzugsweise in dem Bereich von 12 mm bis 51 mm und vorzugsweise eine Länge von 2 m bis 5000 m, vorzugsweise 100 m bis 2000 m aufweist.

**7.** Verstärkungsmaterial (1) nach einem der Ansprüche 1 bis 6, **dadurch gekennzeichnet, dass** die Schichten aus Polymerfasern (4, 5) einen thermoplastischen Charakter aufweisen und insbesondere aus einem thermoplastischen Polymer, einem teilvernetzten thermoplastischen Polymer, einer Mischung aus solchen Polymeren oder einer Mischung aus thermoplastischen und duroplastischen Polymeren gebildet sind.

**8.** Verstärkungsmaterial (1) nach einem der Ansprüche 1 bis 7, **dadurch gekennzeichnet, dass** die Schichten aus Polymerfasern (4, 5) eine Heißklebrigkeit aufweisen und ihre Verbindung mit der unidirektionalen Verstärkungslage dank dieser Heißklebrigkeit umgesetzt ist.

**9.** Verstärkungsmaterial (1) nach einem der Ansprüche 1 bis 8, **dadurch gekennzeichnet, dass** die Schichten aus Polymerfasern (4, 5) identische Vliesstoffe sind.

**10.** Verstärkungsmaterial (1) nach einem der Ansprüche 1 bis 9, **dadurch gekennzeichnet, dass** die Vliesstoffe eine Flächenmasse im Bereich von 0,2 bis 20 g/m$^2$ und/oder eine Dicke von 0,5 bis 50 Mikrometern, vorzugsweise 3 bis 35 Mikrometern aufweisen.

**11.** Verstärkungsmaterial (1) nach einem der Ansprüche 1 bis 10, **dadurch gekennzeichnet, dass** es weder perforiert, noch genäht, noch gestrickt, noch gewebt ist.

**12.** Verfahren zur Herstellung eines Verstärkungsmaterials (1) nach einem der Ansprüche 1 bis 11, **dadurch gekennzeichnet, dass** es die folgenden aufeinanderfolgenden Schritte umfasst:

a1) Anordnen einer unidirektionalen Verstärkungslage (2), die aus einem oder mehreren einzeln verdrillten Verstärkungsdrähten (3) mit einer Drehung von 3 bis 15 Umdrehungen/m gebildet ist,
a2) Anordnen von mindestens zwei Schichten aus Polymerfasern (4, 5), die Vliesstoffe sind,
a3) Fortfahren mit der Verbindung von jeder der Schichten aus Polymerfasern mit jeder der Seiten der unidirektionalen Verstärkungslage.

**13.** Verfahren nach Anspruch 12, **dadurch gekennzeichnet, dass** es vor Schritt a1) einen Schritt zur Umsetzung der unidirektionalen Verstärkungslage (2) umfasst, der das Aufbringen einer Drehung von 3 bis 15 Umdrehungen/m auf einen Draht oder eine Reihe von Verstärkungsdrähten umfasst, wobei die Drehung auf jeden Draht einzeln aufgebracht wird.

**14.** Verfahren nach Anspruch 12 oder 13, **dadurch gekennzeichnet, dass** die unidirektionale Verstärkungslage (2) aus mehreren Verstärkungsfäden (3) gebildet ist und dass das Verfahren vor Schritt a1) umfasst:

i) Aufbringen einer Drehung von 3 bis 15 Umdrehungen/m auf eine Reihe von Verstärkungsdrähten, wobei die Drehung auf jeden Draht einzeln aufgebracht wird,
ii) Ausrichten der so erhaltenen verdrillten Drähte, gegebenenfalls mit anderen Verstärkungsdrähten, und Anordnen der Drähte nebeneinander, um eine unidirektionale Verstärkungslage zu bilden, insbesondere wie in Anspruch 5 definiert.

**15.** Verfahren nach einem der Ansprüche 12 bis 14, **dadurch gekennzeichnet, dass** die Schichten aus Polymerfasern (4, 5), die ein Vliesstoff sind, eine Heißklebrigkeit aufweisen und die Verbindung von Schritt a3) durch Aufbringen von jeder der Schichten aus Polymerfasern auf jeder der Seiten der unidirektionalen Verstärkungslage erhalten wird, wobei das Aufbringen von einer Erwärmung der Polymerfasern begleitet oder gefolgt wird, was zu deren Erweichung oder Verschmelzung führt, worauf wiederum eine Abkühlung folgt.

**16.** Vorform, mindestens teilweise bestehend aus einem oder mehreren Materialien nach einem der Ansprüche 1 bis 11.

**17.** Verfahren zur Herstellung eines Verbundteils aus mindestens einem Verstärkungsmaterial (1) nach einem der Ansprüche 1 bis 11, **dadurch gekennzeichnet, dass** ein duroplastisches, thermoplastisches Harz oder eine Mischung aus duroplastischem und thermoplastischem Harz in das Verstärkungsmaterial, einen Stapel aus mehreren Verstärkungsmaterialien nach einem der Ansprüche 1 bis 11 oder eine Vorform nach Anspruch 16 eingespritzt oder infundiert wird.

**18.** Verfahren zur Herstellung eines Verbundteils nach Anspruch 17, **dadurch gekennzeichnet, dass** es vor dem Infundieren oder Einspritzen des Harzes einen Schritt zum Bilden einer Faltung oder Stapelung umfasst, die mehrere Verstärkungsmaterialien (1) nach einem der Ansprüche 1 bis 11 umfasst, wobei das Verstärkungsmaterial (1) kontinuierlich innerhalb eines Führungselements transportiert und zirkuliert wird, um seine Positionierung während seiner Entfernung sicherzustellen, was zu der gewünschten Faltung oder Stapelung führt.

**19.** Herstellungsverfahren nach Anspruch 17 oder 18, **dadurch gekennzeichnet, dass** es vor dem Infundieren oder Einspritzen des Harzes eine Abscheidung oder Formgebung umfasst, die vorzugsweise die Heißklebrigkeit der Vliesstoffe (4, 5) nutzt, die in dem/den Verstärkungsmaterial(ien) (1) vorhanden sind.

**20.** Verwendung von einem oder mehreren Verstärkungsmaterial(ien) (1) nach einem der Ansprüche 1 bis 11 zur Umsetzung einer Vorform oder eines Verbundteils in Verbindung mit einem duroplastischen, thermoplastischen Harz oder einer Mischung aus duroplastischem und thermoplastischem Harzen.

**21.** Herstellungsverfahren nach einem der Ansprüche 17 bis 19 oder Verwendung nach Anspruch 20, **dadurch gekennzeichnet, dass** ein duroplastisches Harz, insbesondere ein Epoxidharz, eingespritzt oder infundiert wird.

**Claims**

1. Reinforcing material (1) consisting of a unidirectional reinforcing web (2) formed of one or more carbon reinforcing yarns (3), associated on each of its faces with a layer of polymeric fibers (4, 5) which is a nonwoven material, the polymeric part of the reinforcing material representing from 0.5% to 10% of its total weight, and preferably from 2 to 6% of its total weight, **characterized in that** said unidirectional reinforcing web (2) comprises one or a series of individually twisted reinforcing yarns (3) having a twist of 3 to 15 turns/m, preferably of 6 to 12 turns/m.

2. Reinforcing material (1) according to Claim 1, **characterized in that** said unidirectional reinforcing web (2) is formed of a plurality of reinforcing yarns (3), and at least every fifth reinforcing yarn, preferably at least every second or third reinforcing yarn, and preferably all reinforcing yarns, are individually twisted a twist of 3 turns/m to 15 turns/m, preferably 6 to 12 turns/m.

3. Reinforcing material (1) according to Claim 1 or 2, **characterized in that** the unidirectional reinforcing web (2) has a grammage within the range from 126 $g/m^2$ to 280 $g/m^2$, in particular from 126 to 210 $g/m^2$.

4. Reinforcing material (1) according to one of Claims 1 to 3, **characterized in that** the unidirectional reinforcing web (2) is formed of one or more reinforcing yarns (3) of having a titer of 3 to 24 K, preferably 6 to 12 K. carbon

5. Reinforcing material (1) according to one of Claims 1 to 4, **characterized in that** all the carbon reinforcing yarns (3) forming the unidirectional reinforcing web (2) are individually twisted having a twist of 3 turns/m to 15 turns/m preferably 6 turns/m to 12 turns/m, the unidirectional reinforcing web (2) comprising at least 3 carbon reinforcing yarns (3) thus twisted with at least one S-twist reinforcing yarn and at least one Z-twist reinforcing yarn:

   - when the total number of twisted carbon reinforcing yarns (3) forming the unidirectional reinforcing web (2) is even, the number of twisted carbon reinforcing S-twist yarns (3) on one side of the plane Δ and the number of twisted carbon reinforcing S-twist yarns (3) on the other side of the plane Δ, each of which is, independently, an integer in the range {[(total number of yarns)/4] - 35%; [(total number of yarns)/4] + 35%}, each endpoint of the range being rounded to the nearest integer if the formula defining it result in an integer, the other twisted carbon reinforcing yarns (3) being Z-twist yarns;
   - when the total number of twisted carbon reinforcing yarns (3) forming the unidirectional reinforcing web (2) is odd, the number of twisted carbon reinforcing S-twist yarns (3) on one side of the plane Δ and the number of twisted carbon reinforcing S-twist yarns (3) on the other side of the plane Δ, which are either two integers or two and a half integers, and are, each independently, in the range {[(total number of yarns)/4] - 35%; [(total number of yarns)/4] + 35%}, each endpoint of the range being rounded to the nearest integer or integer and a half if the formula defining it results in an integer or integer and a half, the other twisted carbon reinforcing yarns (3) being Z-twist yarns;

   the plane Δ being the plane parallel to the general direction of extension of said unidirectional web (2) and which divides said unidirectional web (2) into two equal parts, being perpendicular to its surface.

6. Reinforcing material (1) according to Claim 5, **characterized in that** it has a width greater than 7 mm, preferably greater than 12 mm, and preferably within the range from 12 mm to 51 mm, and preferably a length from 2 m to 5000 m, preferably from 100 m to 2000 m.

7. Reinforcing material (1) according to one of Claims 1 to 6, **characterized in that** the polymeric fiber layers (4, 5) have a thermoplastic character and, in particular, consist of a thermoplastic polymer, a partially crosslinked thermoplastic polymer, a mixture of such polymers, or a mixture of thermoplastic and thermosetting polymers.

8. Reinforcing material (1) according to one of Claims 1 to 7, **characterized in that** the polymeric fiber layers (4, 5) have hot tack properties and their association with the unidirectional reinforcing web is achieved due to these hot tack properties.

9. Reinforcing material (1) according to one of Claims 1 to 8, **characterized in that** the polymeric fiber layers (4, 5) are identical nonwoven materials.

10. Reinforcing material (1) according to one of Claims 1 to 9, **characterized in that** said nonwoven materials have a basis weight within the range from 0.2 $g/m^2$ to 20 $g/m^2$ and/or a thickness of 0.5 microns to 50 microns, preferably from 3 microns to 35 microns.

11. Reinforcing material (1) according to one of Claims 1 to 10, **characterized in that** it is neither perforated, nor sewn, nor knitted, nor woven.

12. Method for preparing a reinforcing material (1) according to one of Claims 1 to 11, **characterized in that** it comprises the following successive steps:

   a1) providing a unidirectional reinforcing web (2) formed of one or more reinforcing yarns (3) individually twisted and having a twist of 3 turns/m to 15 turns/m,
   a2) providing at least two layers of polymeric fibers (4, 5) which are nonwoven materials,
   a3) associating each of the polymeric fiber layers with each of the faces of the unidirectional reinforcing web.

13. Method according to Claim 12, **characterized in that** it comprises, upstream of step a1), a step for the production of the unidirectional reinforcing web (2) comprising the application of a twist of 3 turns/m to 15 turns/m to a reinforcing yarn or to a series of yarns, said twist being applied to each yarn individually.

14. Method according to Claim 12 or Claim 13, **characterized in that** the unidirectional reinforcing web (2) is formed of a plurality of reinforcing yarns (3) and **in that** the method comprises, upstream of step a1): i) applying a twist of 3 to 15 turns/m to a series of reinforcing yarns, said twist being applied to each yarn individually, ii) aligning the twisted yarns thereby obtained, potentially with other reinforcing yarns, and arranging said yarns side by side, so as to form a unidirectional reinforcing web, in particular as defined in Claim 5.

15. Method according to one of Claims 12 to 14, **characterized in that** the layers of polymeric fibers (4, 5), which are nonwoven materials, have hot tack properties and the association of step a3) is obtained by applying each of the layers of polymeric fibers to each of the faces of the unidirectional reinforcing web, said application being accompanied or followed by heating the polymeric fibers, causing them to soften or melt, which is then followed by cooling.

16. Preform consisting, at least in part, of one or more of the materials of one of Claims 1 to 11.

17. Method for the manufacture of a composite part from at least one reinforcing material (1) according to one of Claims 1 to 11, **characterized in that** a thermosetting resin, thermoplastic resin, or a mixture of thermosetting and thermoplastic resins is injected or infused within said reinforcing material, a stack of a plurality of reinforcing materials according to one of Claims 1 to 11, or a preform according to Claim 16.

18. Method for the manufacture of a composite part according to Claim 17, **characterized in that** it comprises, prior to the infusion or injection of the resin, a step of forming a ply or a stack comprising a plurality of reinforcing materials (1) according to one of Claims 1 to 11, during which said reinforcing material (1) is conveyed and circulates continuously within a guide member, in order to ensure its positioning, when it is laid down to yield the desired ply or stack.

19. Manufacturing method according to Claim 17 or Claim 18, **characterized in that** it comprises, prior to the infusion or injection of the resin, an application or shaping, which preferably utilizes the hot tack properties of the nonwoven materials (4, 5) present in the reinforcing material(s) (1).

20. Use of one or more reinforcing material(s) (1) according to one of Claims 1 to 11, for the production of a preform, or a composite part in association with a thermosetting resin, thermoplastic resin or a mixture of thermosetting and thermoplastic resins.

21. Manufacturing method according to one of Claims 17 to 19, or use according to Claim 20, **characterized in that** a thermosetting resin, and in particular an epoxy resin, is injected or infused.

[Fig.1A]

[Fig.1B]

[Fig.1C]

[Fig.2]

[Fig.3]

[Fig.4]

[Fig.5]

[Fig.6]

[Fig.7]

140g/m²

[Fig.8]

210g/m²

[Fig.9]

[Fig.10]

[Fig.11]

350g/m² m

[Fig.12]

EP 4 117 878 B1

[Fig.13]

[Fig.14]

43

[Fig.15]

[Fig.16]

Permeabilité Transverse (m²)

[Fig.17]

[Fig.18]

[Fig.19]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125728 A
- US 6828016 B
- WO 0058083 A
- WO 2007015706 A
- WO 2006121961 A
- US 6503856 B
- US 20087435693 A
- WO 2010046609 A
- WO 2010061114 A
- EP 2547816 A
- US 20080289743 A
- US 20078361262 A
- US 20119371604 A
- WO 2011048340 A
- WO 2014076433 A
- WO 2013160604 A
- WO 2008155504 A
- WO 2013133437 A
- EP 2376276 A
- WO 2011086266 A
- WO 2006092514 A
- WO 2014191667 A
- WO 2014076433 A1